# EUROPEAN PATENT APPLICATION

(11) **EP 1 300 789 A1**
(43) Date of publication of application: **09.04.2003**
(21) Application number: 01947905.4
(22) Date of filing: 06.07.2001
(51) Int. Cl.: G06F 17/60

(54) **COMMODITY SELLING APPARATUS**

(30) Priority: 07.07.2000 JP 2000207567; 07.07.2000 JP 2000207568
(71) Applicant: Sony Corporation, Tokyo 141-0001 (JP)
(72) Inventor: SHIMADA, Kenshu, c/o SONY MARKETING (JAPAN) INC., Tokyo 108-0074 (JP)
(74) Representative: DeVile, Jonathan Mark, Dr.
(86) International application number: JP0105912
(87) International publication number: WO02005162

(57) **Abstract**

A commodity sale system, accepting an order for a commodity corresponding to a customer's purchasing request over a network and directly sending the ordered commodity to the customer, includes an order information acquisition unit for acquiring from the network the order information prepared based on the commodity purchasing request, accepted from the customer, and a commodity sending command unit for commanding the booked commodity to be sent to the customer. There is provided a related information transmitting unit for transmitting, over the network, the related information on the commodity as a candidate for order, for example, the information relevant to the term of delivery of the commodity. The order information acquisition unit acquires the order information from the network following transmission of the related information by the related information transmitting unit.

## Description

### Technical Field

This invention relates to an apparatus for selling a commodity by exploiting a network, such as Internet. More particularly, it relates to an apparatus for selling an commodity by directly shipping the commodity to a customer responsive to an order from the customer.

### Background Art

In general, when a consumer intends to purchase an commodity, he or she directly visits a store and decides such an commodity as he or she desires to purchase, after checking for various samples or catalogs, actually operating them or hearing an advice or explanation from the sale clerk, to proceed to order the commodity.

Should there be any inventory commodity in the store, the commodity can directly be delivered to the consumer. If not, an order is placed with the manufacturer subject to the consumer's consent. In making the delivery of the ordered commodity, the consumer is requested to re-visit the store for delivery at the store, or the commodity ordered is directly sent to the premises of the consumer or the company etc.

### Disclosure of the Invention

It is an object of the present invention to provide an apparatus for selling commodity whereby a commodity ordered from a customer can be directly sent to the customer responsive to such order.

According to the present invention, there is provided a commodity sale apparatus in which an order of a commodity corresponding to a request by a customer to purchase the commodity is accepted over a network and the ordered commodity is directly forwarded to the customer. The apparatus includes order information acquisition means for acquiring the order information, prepared on accepting the request to purchase the commodity from the customer, from the network, and commodity shipping command means for commanding the shipping of the commodity ordered to the customer based on the order information acquired by the order information acquisition means. This enables the commodity to be directly sent from the plant to the customer so that the store is able to carry out sale without having inventory.

Moreover, according to the present invention, the delivery term of a commodity and the possible quantity of orders under the delivery term are presented in a confirmable form to the sale store. The order information prepared on the basis of the customer's purchasing request under the term of delivery is acquired from the sale store and, based on the so acquired order information, the booked commodity is commanded to be sent to the customer within the presented term of delivery. By so doing, if there is no inventory of the commodity on the store or in the premises of the manufacturer, but the customer visiting the store expresses his or her intention of purchasing the commodity, and so requests the store, the store is able to acquire the term of delivery of the commodity and the quantity of possible orders within the term of delivery, and hence is in a position to suggest the delivery term to the customer reliably. On the other hand, the customer may reference the so suggested delivery term in deciding or not deciding to purchase the commodity or to get the commodity reserved for purchase.

According to the present invention, the order for a commodity made up of individual commodities as selected by the customer is accepted from the sale store, and the terms of delivery of the individual commodities as well as the possible quantity of orders are presented to the sale store in a confirmable form. The order information prepared on the basis of the commodity purchasing requests from the customer under the delivery terms is acquired from the sale store and, based on the so acquired order information, the booked commodities are commanded to be sent to the customer within the presented term of delivery. Since the sale store is able to obtain the term of delivery and the quantity of possible orders under the term of delivery for the commodity made up of individual commodities as selected by the customer, the sale store may feel at ease in suggesting the term of delivery. On the other hand, the customer is in a position to decide or not to decide to purchase the commodity or to have the commodity reserved for purchase on the basis of the so suggested term of delivery.

According to the present invention, there is provided a commodity booking device in which an order for a commodity is placed with a commodity selling device and the ordered commodity is directly sent to the customer under the sending command by the commodity selling device. The order information of the commodity determined to be purchased is prepared on the basis of the suggestion to the customer of the so provided term of possible delivery and is transmitted to the commodity selling device. Thus, the commodity can be directly sent from the plant to the customer so that the store is able to carry out sale without having inventory.

According to the present invention, the commodity information pertinent to a specified commodity as requested over the network is extracted from the commodity information storage means and furnished to the requesting client device. The commodity information of one or more commodities usable in concerted fashion with one or more specified commodity as selected by the client device from the commodities furnished, that is related commodities, is extracted from the commodity information storage means and transmitted to the client device. This optimally furnishes the information relevant to the related commodities that can be connected or mounted to the commodity desired by the customer.

According to the present invention, the commodity information pertinent to a specified commodity as requested over the network is extracted from the commodity information storage means and furnished to the requesting client device. The commodity information of one or more commodities, usable in concerted fashion with one or more specified commodity selected by the client device from the commodities furnished, that is related commodities, is extracted from the commodity information storage means and transmitted to the client device. The ordered commodity and the order placing information transmitted from the client device are acquired by way of booking the commodities. This enables reliable booking of the related commodities that can be connected or mounted to the commodity desired by the customer.

The related commodities that can be used in concerted fashion with the specified commodity may be those commodities that allow for at least one of direct connection, radio connection, removable connection, internal connection or indirect mounting thereof with respect to the specified commodity, whereby it is possible to confirm the broad range of concerted operations.

By transmitting commodities, proven to operate normally from the operation verification information, as related commodities to the client device, it is possible to verify whether or not the commodities in question operate as normally.

The information pertinent to the commodities usable in concerted fashion with a commodity, the commodity information of which has been stored in the commodity information storage means, may be acquired from the commodity supplier for storage in commodity storage means, while the operation verification information pertinent to the commodities, the commodity information of which is stored in the commodity information storage means, is acquired and stored in the commodity information storage means, whereby the latest commodity information or operation verification information may be produced.

In case the commodity selected as the related commodity proves an over-equipment, the attention instigation information, instigating the attention of the user to such tenor, may be transmitted, whereby the customer may be apprized of the fact that the related commodity proves an over-equipment. Moreover, this information may be useful as a reference in deciding or not deciding to purchase the commodity in question.

The objective information specifying the objective of using or purchasing a commodity may be acquired, while the related commodities may be extracted from the commodity information storage means, as a constraint condition, and transmitted to the client device, whereby a commodity can be proposed which is in meeting with the customer's liking more satisfactorily.

According to the present invention, the commodity information pertinent to the specified commodities requested over the network may be furnished to the requesting client device, and one or more commodities usable in concerted fashion with one or more specified commodities as selected from the so furnished commodities by the client device may then be transmitted to the client device. This allows to optimally furnish the related commodities pertinent to the related commodities that can be connected or mounted to the commodities desired by the customer.

Other objects, features and advantages of the present invention will become more apparent from reading the embodiments of the present invention as shown in the drawings.

### Brief Description of the Drawings

Fig. 1 is a block diagram showing the basic structure of a hardware for a goods selling device and an order receiving device for commodities according to a first embodiment of the present invention.
Fig.2 is a block diagram showing a circulation management device inclusive of a first commodity selling device according to the first embodiment of the present invention.
Fig.3 shows the data flow in the entire circulation management device in the first embodiment of the present invention.
Fig.4shows a database showing the quantity of commodity-based sale frames assigned to selling stores and the quantity of finalized orders (ODs) as kept in a server of the circulation management center, in the perspective of the relationship between the customers, selling stores and the center, and a database pertinent to details of the orders in the selling stores, according to the first embodiment of the present invention.
Fig.5 shows the structure of the commodity selling device or the order receiving device for commodities, realized by the server of the circulation management center in the first embodiment of the present invention.
Fig.6 illustrates a data image of data necessary for inputting the order information, information on the term of delivery or the customer information, and data in a table necessary for production command, inventory reflection, provisioned shipment and delivery, as obtained from the input information.
Fig.7 is a flowchart processed in the commodity selling device or the order receiving device for commodities in the server in the first embodiment of the present invention.
Fig.8 shows an image 1 displayed at the selling store in processing by the commodity selling device or the order receiving device for commodities in the server in the first embodiment of the present invention.
Fig.9 shows an image 2 displayed at the selling store in processing by the commodity selling device or the order receiving device for commodities in the server in the first embodiment of the present invention.
Fig.10 shows an image 3 displayed at the selling store in processing by the commodity selling device or the order receiving device for commodities in the server in the first embodiment of the present invention.
Fig.11 shows an image 4 displayed at the selling store in processing by the commodity selling device or the order receiving device for commodities in the server in the first embodiment of the present invention.
Fig.12 shows an image 5 displayed at the selling store in processing by the commodity selling device or the order receiving device for commodities in the server in the first embodiment of the present invention.
Fig.13 shows an image 6 displayed at the selling store in processing by the commodity selling device or the order receiving device for commodities in the server in the first embodiment of the present invention.
Fig.14 shows an image 7 displayed at the selling store in processing by the commodity selling device or the order receiving device for commodities in the server in the first embodiment of the present invention.
Fig.15 shows the image 6 displayed at the selling store in processing by the commodity selling device or the order receiving device for commodities in the server in the first embodiment of the present invention.
Fig.16 shows the image 7 displayed at the selling store in processing by the commodity selling device or the order receiving device for commodities in the server in the first embodiment of the present invention.
Fig.17 shows an image 8 displayed at the selling store in processing by the commodity selling device or the order receiving device for commodities in the server in the first embodiment of the present invention.
Fig.18 is a block diagram showing the basic structure of the hardware realizing a commodity information furnishing device and an order receiving device for commodities according to fourth to sixth embodiments of the present invention.
Fig. 19 is a block diagram showing a device portion of the commodity information furnishing device of the fourth embodiment of the present invention having the function of presenting commodities, instigating the attention, presenting commodities for-utilization or purchase or of furnishing the information pertinent to commodities usable in concerted fashion or the information for operation verification.
Fig.20 is a block diagram showing a device portion of the commodity information furnishing device of the fourth embodiment of the present invention having the function pertinent to maintenance of commodities usable in concerted fashion or to maintenance of the operation verification information.
Fig.21 conceptually illustrates the relationship among different product categories stored in the information on the commodities in the fourth embodiment and the relationship of concerted operation between respective commodities in the operation verification information.
Fig.22 conceptually illustrates the contents of the operation verification information in the fourth embodiment of the present invention.
Fig.23 conceptually illustrates the contents of the attention instigating information stored in commodity information storage means in the fourth embodiment of the present invention.
Fig.24 shows the overall schematic information pertinent to a service image of the fourth embodiment of the present invention.
Fig.25 illustrates a commodity selecting image presented to a client device 3 for presenting usable commodities in the fourth embodiment of the present invention.
Figs.26A to 26C illustrate the state of the commodity selecting image changing responsive to operations by a client device in the fourth embodiment of the present invention.

### Best Mode for Carrying out the Invention

Referring to the drawings, certain preferred embodiments of the present invention will be explained in detail.

### (1) Explanation of Structure Common to First to Third Embodiments

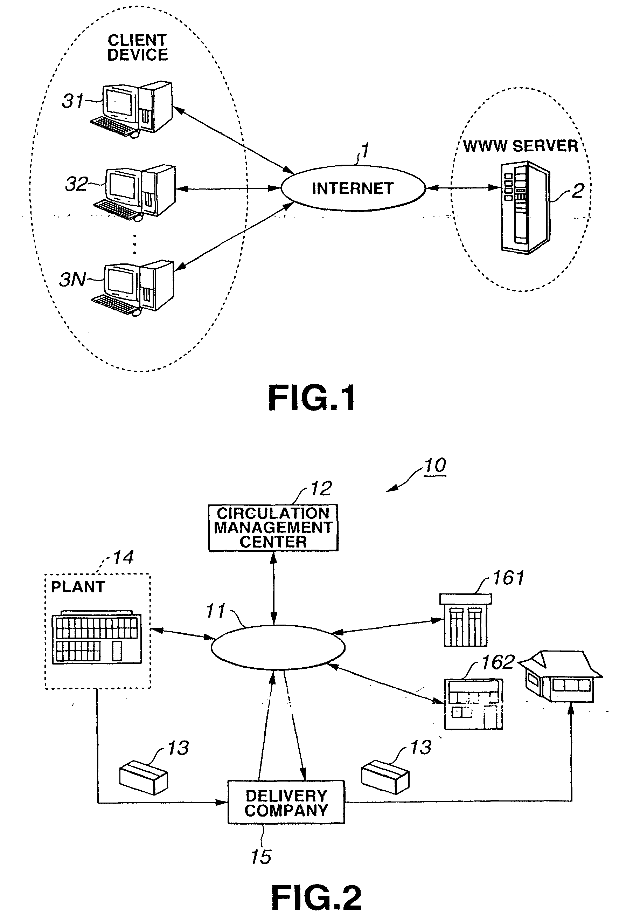

Fig.1 is a block diagram showing the rudimentary structure of a hardware for a goods selling device and an order receiving device for commodities according to first to third embodiments of the present invention.

In Fig.1, the Internet 1 is made up of a large number of computers and computer networks, with a communication link interconnecting these computers. By the computers being interconnected over the Internet 1, the information can be exchanged between the respective computers, using various services, such as E-mail, gopher or WWW (World Wide Web).

To this Intrernet 1 are connected a WWW server 2 and computers 31, 32, 33, ···, 3N of selling stores. These computers of the selling stores are grossly termed 3N.

In the present embodiment, the computers are interconnected over the Internet. However, the computers may also be interconnected using a variety of communication means other than the Internet, such as LAN (Local Area Network), Intranet, Extranet, personal computer communication or communication exploiting dedicated networks.

Moreover, the above-mentioned communication, employing or not employing the Internet 1, encompasses not only the communication exploiting wired means but also the communication partially or wholly exploiting radio means. For example, the communication may use a radio path partially or entirely, as in the case of portable telephone of PHS (Personal Handy-phone System).

The WWW server 2, also termed Web server or Web site, furnishes WWW services on the Internet, and has Web pages, such as a variety of text or graphics information, stored on a hard disc provided in its inside.

The various resources, such as WWW server 2 or web pages, can be uniquely identified by URL (Uniform Resource Locator), which is an addressing technique for identifying the resources on the Internet 1.

The store computer 3N transfers Web page browsing requests to the URL of the Web page, desired to be browsed, or to the identified WWW server 2, in accordance with a preset transfer protocol, such as HTTP (Hyper Text Transfer Protocol). The store computers 31, 32, 33, 3N, which transferred the browsing requests, thus receive the web pages, transmitted from the WWW server 2, to demonstrate the received web page on the respective display units. In this manner, the user owning the store computer 3N may have the opportunity to browse the web page.

The store computer 3N has stored therein a WWW browser configured for transferring the Web page browsing request and for displaying the received Web page.

The Web pages are mostly defined using the HTML, that is, formulated using the HTML. The HTML document includes a variety of identifiers (tags) for controlling the display of graphics, control and other functions. Moreover, with the HTML documents, the link destination can be specified e.g., with the URL of the Web page that can be used in the WWW server 2 which has or has not requested the browsing of the Web page.

When requested to browse the Web page, the store computer 3N sends the HTML document to the server 2.

If, as a result of the transfer request, the store computer 3N has received the HTML document, sent from the WWW server 2, the store computer demonstrates the Web page, in accordance with the definition of the HTML document, to permit the user of the store computer 3N to browse the Web page.

The commodity information furnishing devices or the order receiving devices for commodities, exploiting the Internet 1, have already been offered to the market.

### (2) First Embodiment

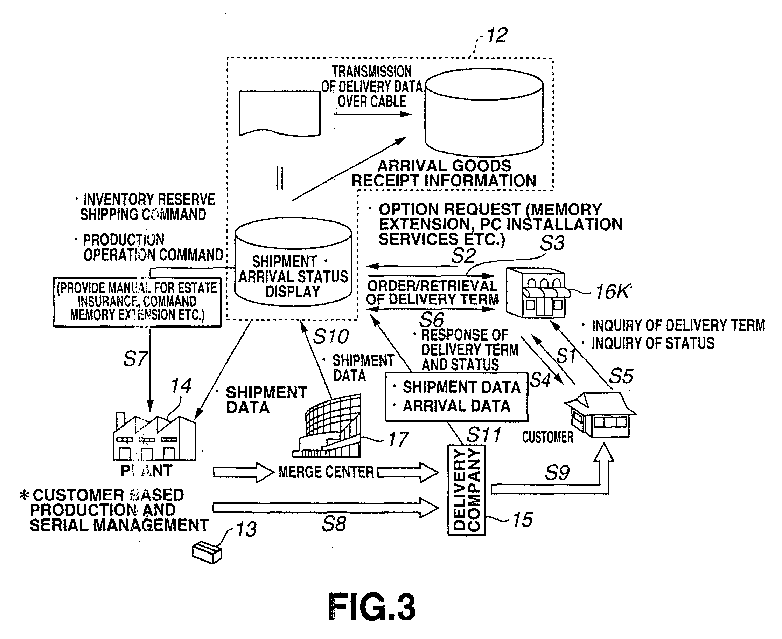

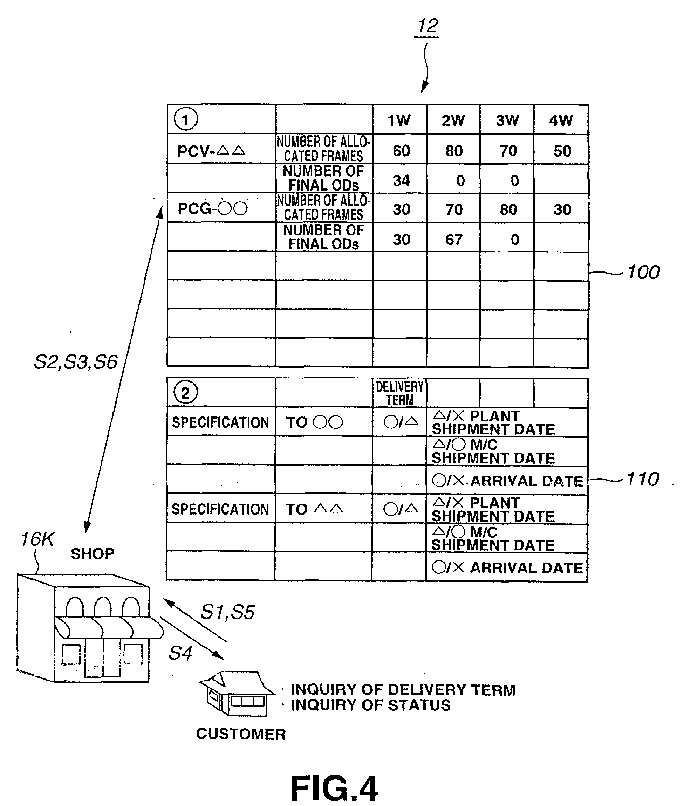

Fig.2 is a block diagram showing a circulation management device, including the first commodity selling device according to the first embodiment of the present invention. Fig.3 shows the flow of data in the entire circulation management device. Fig.4 shows a database showing the quantity of commodity based selling frames assigned to selling stores and the that of finalized orders (ODs), as provided in a server of the circulation management center, in the perspective of the relationship between the customers, selling stores and the center, and a database pertinent to details of the orders in the selling store.

Referring to the these figures, the structure of the device and data flow are hereinafter explained.

In a circulation management device 10, shown in Fig.2, a circulation management center 12, a manufacturing plant 14 manufacturing commodities 13 for sale, a delivery company 15 making delivery of these commodities 13, and selling stores 161, 162, ···, selling the commodities 13, are interconnected over the Internet 11.

In Fig.3, as in Fig.2, the circulation management device 10 is made up by the circulation management center 12, the commodities 13, the manufacturing plant 14, the delivery company 15, and the merge center 17. However, in Fig.3, the main point is the signal flow among these devices. Meanwhile, the circulation management center 12 is provided with a server for executing processing programs for order/delivery term retrieval, inquiries into status of distribution of the commodities, commands for shipment and commands for production operations.

The commodity sale device of the first embodiment of the present invention is applied to this circulation management device 10.

Meanwhile, in Fig.2 ff., exchange of various data occurs in the same scheme as that of the Internet 1, WWW server 2 and the computer 3N of the selling store, explained above with reference to Fig.1, unless otherwise specified.

A server provided in this circulation management center 12 accepts orders corresponding to a request for purchasing commodity by a customer from a selling store and executes a program for selling the commodity for directly shipping the ordered goods to the customer (see Fig.3).

It is now assumed that the customer visits a selling store 16K to make an inquiry into the term of delivery of the commodity he or she desires to purchase (S1). The sale clerk of the selling store 16K acts on the store computer to retrieve the Web page by the delivery term presentation program in the server of the circulation management center 12 over the Internet 11 (S2).

The server in the circulation management center 12 has a shipment frame master, a shipment frame (allocation) table and a provision table for the current week, used by the delivery term presentation program. In the shipment frame master, there are stored a database pertinent to the term of delivery 100 and a database for details 110.

In the database pertinent to the term of delivery 100, the number of frame assigned to each commodity type is determined every preset term (every week in the present embodiment) and the quantity of the finalized orders (ODs) is stored.

In the database for details 110, there are stored data pertinent to the term of delivery, shipment and arrival on the customer basis.

The server in the circulation management center 12 is responsive to the request from the selling store 16K by the delivery term presentation program to refer to the database pertinent to the term of delivery 100 to transmit the term of delivery of the commodity and the quantity of feasible orders under the term of delivery in question to the computer of the selling store 16K in a confirmation enabling form (S3).

On receipt of a command to present the term of delivery of an commodity (PCG-○○), the delivery term presentation program refers to the database pertinent to the term of delivery 100 shown in Fig.4 to retrieve the frame for the first week (1W) of the commodity (PCG-○○). If the delivery term presentation program verifies that the frame for the first week (1W) is 30 and the quantity of finalized orders is also 30, it retrieves the frame for the next week (2W). The frame allocated for he next week (2W) is 70 and the quantity of finalized orders is 67, so that, if the quantity of orders is 3, the next week is to be the term of delivery. This tenor is notified to the selling store 16K over the Internet 11.

Since it is probable that a customer intends to receive the goods in four weeks, the delivery may be reserved as being the delivery of the fifth week.

In case of overflow of the quantity of finalized orders, the delivery is indicated as being that for the next week. For example, if the quantity of finalized orders of the commodity (PCG-○○) for 2W has reached 72, the overflowing quantity 2 is displayed in 3W.

It is noted that the number of frames shown in the database pertinent to the term of delivery 100 may be allocated in any suitable known methods, such as on the basis of past records of the sale of the goods, past records of sale of analogous goods, management strategies, such as territories, offers from the selling stores or past sale records.

In this manner, the term of delivery of the goods and the quantity of orders that can be dealt with under the delivery term in question are determined in the display of the computer of the sale store 16K. The sale clerk may then be in a position to suggest the customer as to the term of delivery of the commodity and the quantity of orders that can be dealt with under the term of delivery in question (S4).

If the customer has desired to purchase the goods under the term of delivery as suggested by the sale clerk of the selling store (term of delivery presented in a confirmation enabling form by the delivery term presentation program), the sale clerk of the sale store 16K hands over a purchase order to the customer to have the customer enter necessary items in the purchase order (S5).

The order information prepared on the basis of the request for purchase of the goods, accepted from the customer, is transmitted from the computer of the selling store 16K to the circulation management center 12 over the Internet 11 (S6). On receipt of the order information, the server of the circulation management center 12 runs an order information acquisition program to acquire the order information formulated on the basis of the goods purchasing request as accepted from the customer under the delivery term presented as described above.

The server of the circulation management center 12 runs a program for commanding the manufacturing plant 14 over the Internet 11 to send the ordered goods to the customer within the presented delivery term based on the acquired order information (S7). That is, the server executes the order information acquisition program to acquire the information concerning the article identifying information and the destination of delivery of the article.

The server then runs the article shipping command program to send the command for shipping the ordered goods and the information pertinent to the destination to the manufacturing plant 14. The manufacturing plant 14 then is able to acquire the type and the quantity of the goods as well as the address, name, appellation or the department or section in charge of the destination of delivery, or the time of delivery.

The server of the circulation management center 12 then decides the date of sending to the customer of the goods corresponding to the order information acquired on executing the order information acquisition program. Additionally, the server executes a shipping date transmitting program to transmit the shipping date to the selling store, while executing the article shipping command program to specify the transmitted shipping date to command the article to be sent to the customer.

The manufacturing plant 14 delivers article 13, ordered by the customer, based on the article shipping command data supplied from the circulation management center 12, to the delivery company 15 (step S8). The delivery company 15 directly sends the article 13 to the customer (S9).

When supplied with the delivery command data from the circulation management center 12, the manufacturing plant 14 sends the delivery state data, indicating the state of delivery, that is the data specifying whether or not the article 13 has been delivered to the customer, periodically, that is at a rate of several times a day, through the Internet 11 to the circulation management center 12 (S10).

When the delivery of the article 13 is commenced, the delivery company 15 sends the finished shipment data to the server of the circulation management center 12 and, on delivery of the article 13 to the customer, the delivery company 15 transmits the finished arrival data periodically, for example, at a rate of several times a day, to the circulation management center 12 over the Internet 12 (S11).

The circulation management center 12 may have the manufacturing plant 14 easily map out and re-check a manufacturing schedule, in keeping with the state of finished sale, to have the manufacturing plant manufacture the goods 13 and resource materials.

Meanwhile, in the circulation management device 10, a production management center provided in the head office of the manufacturer is connected to the Internet 11 and acquires delivery state data, customer order data and store order data from the circulation management center 12 over the Internet 11, while generating shipment command data, corresponding to the finished sale state, based on the storage data, delivery state data, customer order data and the store order data, to send the so generated data over the Internet 11 to the manufacturing plant 14.

In the above-described first goods selling device, the delivery term of the goods and the quantity of possible orders under the term specified are presented to the store in a confirmable state, responsive to a request from the selling store, the order information formulated on the basis of the goods purchase request under the so specified term, accepted from the customer, is acquired from the store, and the ordered commodity may be commanded to be delivered to the customer within the presented delivery term, so that, even if there is no inventory commodity in the store or in the delivering manufacturer, but if the customer visiting the store expresses intention to purchase the goods, and the selling store so requests, the selling store is able to acquire the information pertinent to the term of delivery and the quantity of possible orders under the delivery term, in compliance with the request, in a confirmable state, and hence the customer may be positively informed of the term of delivery.

With the present first goods sale device, the customer is able to make decision as to making a purchase or reservation as he or she references the so suggested delivery term.

Moreover, with the present first goods sale device, the order information formulated on the basis of the request for purchasing the commodity, as accepted from the customer under the presented delivery term, is acquired from the selling store, and the ordered goods may be commanded to be sent to the customer within the presented delivery term based on the so acquired order information, so that the goods can be directly sent from the plant to the customer, and hence the store is able to prosecute the sale without having the inventory, with the result that it becomes possible to evade the inventory risk and to prevent the worsening of fund circulation from occurring.

In the above-described goods sale device, the delivery term is presented on the basis of the number of frames allocated to the selling stores 161, 162, ···by the database pertinent to the term of delivery 100. Alternatively, the term of delivery may also be presented to the store by the following procedures:

Specifically, it is possible for the server of the circulation management center 12 to execute a product number acquisition program to acquire the total number of products for each commodity sort produced in accordance with a production schedule mapped out by a pre-defined production schedule procedure, every preset time period, to execute the delivery term presentation program and to present for the selling store a non-ordered fraction of the total number of products for the preset time period, such as one week, as the quantity of orderable products, with the preset time period as the term of delivery.

It is also possible for the server of the circulation management center 12 to acquire the total number of products every preset time period for each commodity sort produced in accordance with a production schedule mapped out by a pre-defined production schedule procedure, on executing a product quantity acquisition program, to execute the sale quantity allocation program to decide the allocation quantity for each selling store as calculated from the total quantity of products for each preset period, and to execute the delivery term presentation program to present to the selling store a non-ordered fraction of the allocation quantity for the selling store which made the request as being the quantity of orderable products for the preset time period in a confirmable form.

A variety of techniques are known of the production -schedule mapping sequence, as the scheduling algorithm, such that any of these known technique may be used. The prime production cost is the sum of costs of individual components used in the production schedule, labor cost incurred in working or assembling, and energy costs. It is noted that the decision procedure of the prime production costs is marketed as being a part of a package software of the scheduling algorithm as a prime cost calculating module and any of these techniques may be used.

Meanwhile, if, in mapping out a production schedule, priority needs to be placed on an optional item, it is necessary to minimize the priority items as being the objective function and to satisfy the constraint conditions, such as working rate, number of set-up steps, total production time etc. The mapping sequence of the production schedule is already known as a schedule algorithm and any of these techniques may be used.

By adopting this production schedule, optimum commodity production becomes feasible in the first commodity selling device. In case of a bad selling commodity, the components intended for the commodity may be used for other commodities to enable construction of a less risky system.

### (3) Second Embodiment

The second goods selling device, as a second embodiment of the present invention, is now explained. In the following explanation of the second goods selling device, as the second embodiment of the present invention, reference is again made to Figs.1 to 4.

The second goods selling device is pertinent to placing an order for a commodity made up of other individual component commodities. The present second goods selling device differs from the first goods selling device in that the first goods selling device simply presents the delivery term of he commodity to receive an order for the goods, whereas, in the second goods selling device, the order is for a commodity made up of other individual component commodities. In this second goods selling device, the term of delivery for the commodity made up of other individual component commodities may be presented, an order may be accepted and the commodity made up of the individual component commodities is directly delivered to the customer within the term of delivery. This second goods selling device is now explained.

A server provided in this circulation management center 12 accepts an order corresponding to a request for purchasing commodity by a customer from a selling store and executes a program for selling the commodity for directly shipping the ordered goods to the goods selling program.

It is now assumed that a customer visited a selling store 16K to make an inquiry into the term of delivery of the commodity he or she desires to purchase (S1). The sale clerk of the selling store 16K acts on a store computer to retrieve a Web page by the delivery term presentation program in the server of the circulation management center 12 over the Internet 11 (S2).

The server in the circulation management center 12 has a master of a shipment frame, a shipment frame (allocation) table and a provision table for the current week, used by the delivery term presentation program. In the master of the shipment frame, there are stored a database pertinent to the term of delivery 100 and a database for details 110. The database pertinent to the term of delivery 100 and the database for details 110 have already been explained and hence are not explained in detail.

The server in the circulation management center 12 refers to the database pertinent to the term of delivery 100, responsive to the request from the selling store 16K by the delivery term presentation program, to transmit the terms of delivery of the commodity components and the quantity of feasible orders under the term of delivery in question to the computer of the selling store 16K in a confirmation enabling form (S3).

On receipt of a command to present the terms of delivery of individual commodity components, the delivery term presentation program refers to the database pertinent to the term of delivery 100 shown in Fig.4 to retrieve the frames for the first week (1W) of the individual commodity components. If the delivery term presentation program verifies that the frame for the first week (1W) is a preset quantity and the quantity of finalized orders is also the preset quantity, it retrieves the next week (2W). If there is allowance in the frame allocation quantity for the next week (2W), the delivery term for this redundant quantity is set as the next week. The delivery term for a quantity exceeding this quantity is set as the week after the next week, with the redundant quantity being the orderable quantity of the goods. This tenor is sent over the Internet 11 to the selling store 16K.

The frame allocation numbers shown in the database pertinent to the term of delivery 100 have already been explained and hence are not explained here for simplicity.

In this manner, the terms of delivery of the individual commodity components and the orderable quantity of the goods under this term of delivery are demonstrated in the display of the computer of the sale store 16K. Thus, the store clerk is able to suggest the customer as to the terms of delivery of the individual commodity components and the orderable quantity of the goods under this term of delivery (S4).

If the customer has wished to purchase the individual commodity components under the terms of delivery as suggested by the store clerk, that is the term of delivery presented by the delivery term presentation program, the sale clerk of the selling store 16K hands over the purchase order to the customer to have the customer to enter necessary items in the purchase order (S5).

The order information, prepared on accepting a commodity purchase request from the customer, is transmitted from the computer of the selling store 16K over the Internet 11 to the program circulation management center 12 (S6).

On accepting the order information, the server of the circulation management center 12 runs the order information acquisition program to acquire the order information prepared on accepting the goos purchase request accepted from the customer under the term of delivery presented as described above.

The server of the circulation management center 12 runs the article shipping command program to command the manufacturing plant 14 to send the ordered goods to the customer over the Internet 11 within the term of delivery as presented (S7).

The commodity made up by the individual commodity components is directly delivered from the manufacturing plant 14 by the delivery company 15 by processing wholly similar to that in the case of the first goods sale device.

In the above-described second goods selling device, the terms of delivery of the individual commodity components and the orderable quantity of the goods under the terms of delivery are presented in a confirmable form to the selling store, responsive to a request from the selling store, and the order information prepared on the basis of the commodity purchasing request from the customer under the term of delivery is acquired from the selling store. It is then commanded to send the ordered commodity to the customer within the term of delivery presented in the delivery term presentation program, based on the so acquired order information. Thus, if a customer visiting a store intends to purchase the goods constructed from the individual components he or she likes, but which are not currently on the store or in the inventory of the store, and if the selling store makes a corresponding request, the selling store is able to acquire the terms of delivery of the individual component commodities and the quantity of possible orders under the delivery terms in an confirmable form. Thus, the store is able to suggest the customer as to the reliable term of delivery.

Moreover, with the present second goods selling device, the customer is able to decide his or her will to purchase or reserve the goods with the so suggested term of delivery taken into consideration.

Moreover, with the present second goods selling device, in which the order information, formulated on the basis of the request for purchasing the individual goods from the customer in accordance with the presented term of delivery, is acquired from the selling store and the individual commodity components so ordered may be commanded to be sent to the customer within the presented term of delivery based on the so acquired order information, the goods made up by the individual components can be directly sent from the plant to the customer. The result is that the store is able to prosecute the sale without having the inventory, with the result that it becomes possible to evade the inventory risk and to prevent the worsening of fund circulation from occurring.

In the above-described second goods sale device, the delivery term is presented on the basis of the number of frames allocated to the selling stores 161, 162, ···by the database pertinent to the term of delivery 100. Alternatively, the term of delivery may also be presented to the store by the following procedures:

Specifically, it is possible for the server of the circulation management center 12 to execute a product quantity acquisition program to acquire the total quantity of products for each commodity sort produced in accordance with a production schedule mapped out by a pre-defined production schedule procedure, every preset time period, to execute the delivery term presentation program and to present for the selling store a non-ordered fraction of the total quantity of products for the preset time period, such as one week, as the quantity of orderable products, with the preset time period as the term of delivery.

It is also possible for the server of the circulation management center 12 to acquire the total quantity of products every preset time period for each commodity sort produced in accordance with a production schedule mapped out by a pre-defined production schedule procedure, on executing a product quantity acquisition program, to execute the sale quantity allocation program to decide the allocation quantity for each selling store as calculated from the total quantity of products for each preset period, and to execute the delivery term presentation program to present to the selling store a non-ordered fraction of the allocation quantity for the selling store which made the request as being the quantity of orderable products for the preset time period in a confirmable form.

The production schedule mapping out procedure has already been explained and hence is not explained specifically.

By adopting such production schedule, optimum production of goods becomes possible with the second goods selling device. In the case of bad selling goods, the component parts for the goods may be adapted for use in other goods to render it possible to construct a less risky system.

### (4) Third Embodiment

A device for booking an order for goods, according to a third embodiment of the present invention, is now explained. In the explanation of the present third embodiment of the order booking device for goods, reference is again made to Figs.1 to 4.

The device for booking an order for goods according to the present third embodiment of the present invention places an order for goods with the first or second goods sale device, on the premises that the fee is paid on the basis of the request for purchasing the goods by a customer, with the ordered goods being directly sent to the customer in accordance with a sending command by the first or second goods sale device.

Referring to Fig.2, a server of the circulation management center 12 is connected over the Internet 11 to the computers of the selling stores 161, 162, ···. Of course, the server of the circulation management center 12 is connected over the Internet 11 to the manufacturing plant 14 and to the delivery company 15.

The server of the circulation management center 12 is made up of delivery term acquisition means, implemented by execution of the delivery term acquisition program, order information transmission means, implemented by execution of the order information transmission program, and a shipping source information transmission means, implemented by execution of the shipping source information transmission means.

In the server of the circulation management center 12, the delivery term acquisition means acquires the delivery term of goods and the quantity of possible orders under the delivery term, in a conformable form. The order information transmission means formulates the order information of goods, determined to be purchased, based on the presentation to the customer of the possible term of delivery for order, as acquired by the delivery term acquisition means, to send the so formed order information to the delivery term sale device. The shipping source information transmission means acquires the information pertinent to the shipping destination of the goods to the customer, who determined to purchase the goods, to send the information to the goods sale device.

The operation of the above-described device for booking the order for goods is hereinafter explained.

It is now assumed that a customer visits a selling store 16K to make an inquiry into the term of delivery of the commodity he or she desires to purchase (S1). The sale clerk of the selling store 16K acts on a store computer to retrieve a Web page by the delivery term presentation program in the server of the circulation management center 12 over the Internet 11 (S2).

In the server in the circulation management center 12, there are stored the database pertinent to the term of delivery 100 and the database for details 110.

The server in the circulation management center 12 references the database pertinent to the term of delivery 100 by the delivery term acquisition program, formulates the term of delivery of the goods and the order information under the delivery term and transmits the so formed order information to the computer of the selling store 16K in a confirmable form (S3).

On receipt of a command to present the terms of delivery of individual commodity components, the delivery term acquisition program refers to the database pertinent to the term of delivery 100 to retrieve the frames for the first week (1W)of the individual commodity components. If the delivery term presentation program verifies that the frame for the first week (1W) is a preset quantity and the quantity of finalized orders is also the preset quantity, it retrieves the next week (2W). If there is allowance in the frame allocation quantity for the next week (2W), the delivery term for this redundant quantity is set as the next week. The delivery term for a quantity exceeding this redundant quantity is set as the week after the next week, with a redundant quantity for the week after the next week being the quantity of the goods that can be ordered. This tenor is sent over the Internet 11 to the selling store 16K.

The frame allocation numbers shown in the database pertinent to the term of delivery 100 have already been explained and hence are not explained here for simplicity.

In this manner, the terms of delivery of the individual commodity components and the quantity of the goods that can be ordered under this term of delivery are demonstrated in the display of the computer of the sale store 16K. Thus, the store clerk is able to suggest the customer as to the terms of delivery of the individual commodity components and the quantity of the goods that can be ordered under this term of delivery (S4).

If the customer has wished to purchase the individual commodity components under the terms of delivery as suggested by the store clerk, that is the possible term of delivery for the order presented by the delivery term presentation program, the sale clerk of the selling store 16K hands over the purchase order to the customer to have the customer enter necessary items in the purchase order (S5). If once the entry in the purchase order is made, the order information and the information concerning the shipping destination are produced.

The order information and the information of the shipping destination are sent from the computer of the selling store 16K over the Internet 11 to the server of the circulation management center 12 (S6).

On receipt of the order information, the ordering transmission means of the server of the circulation management center 12 delivers the ordering information to the first or second goods sale device, that is to the first or second goods sale program.

Similarly, on receipt of the information on the delivery destination, delivery destination information transmitting means of the server of the circulation management center 12 delivers the delivery destination information to the first or second commodity selling device (that is to the first or second commodity selling device).

On receipt of the information on the shipping destination, the server of the circulation management center 12 causes the order information acquisition program to run to acquire the order information formulated on the basis of the goods purchase request accepted from the customer under the presented term of delivery.

The first or second goods selling device, in the server of the circulation management center 12, commands the manufacturing plant 14 to send the ordered goods to the customer within the specified term of delivery (S7).

The commodity constructed from the individual commodity components is directly delivered to the customer from the manufacturing plant 14 to the delivery company 15 by the processing similar to that in the first goods selling device.

With the device for booking the order for goods according to the third embodiment of the present invention, the term of delivery of goods and the quantity of possible orders under the delivery term are acquired in a confirmable form. The ordering information for the goods, determined to be purchased based on the presentation to the customer of the possible term of delivery, as acquired, is formed and sent to the delivery term sale device. The information pertinent to the shipping destination of the goods for the customer who determined to purchase the goods is acquired and sent to the goods sale device. Additionally, the goods selling device is caused to receive the order for the goods in question on the premises that the fee has been paid based on the request for purchasing the goods by a customer, with the ordered goods being directly sent to the customer in accordance with a sending command by the goods sale device.

Consequently, the problem of failure in collection of fee may be eliminated. Moreover, since the goods 13 are directly delivered to the customer from the manufacturing plant 14, the inventory risk may be evaded to improve the cash flow. (5) Modification of First to Third Embodiments

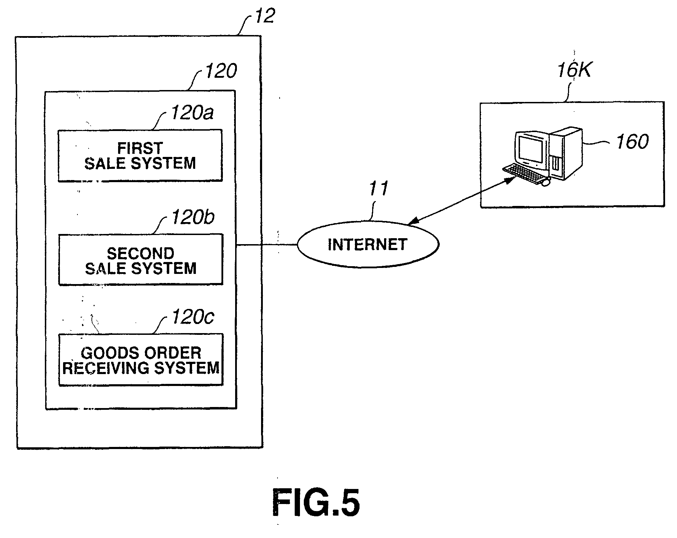

Referring to Figs.5 to 17, the operation of confirming the quantity of possible orders processed by the goods selling device in the server of the circulation management center 12 (operation of confirming the term of delivery of goods desired to be purchased by the customer and the quantity of possible orders processed during the term of delivery), the operation of placing an order (operation of acquiring the order information) and the order inquiring operation (operation of inquiring after the order information) are hereinafter explained.

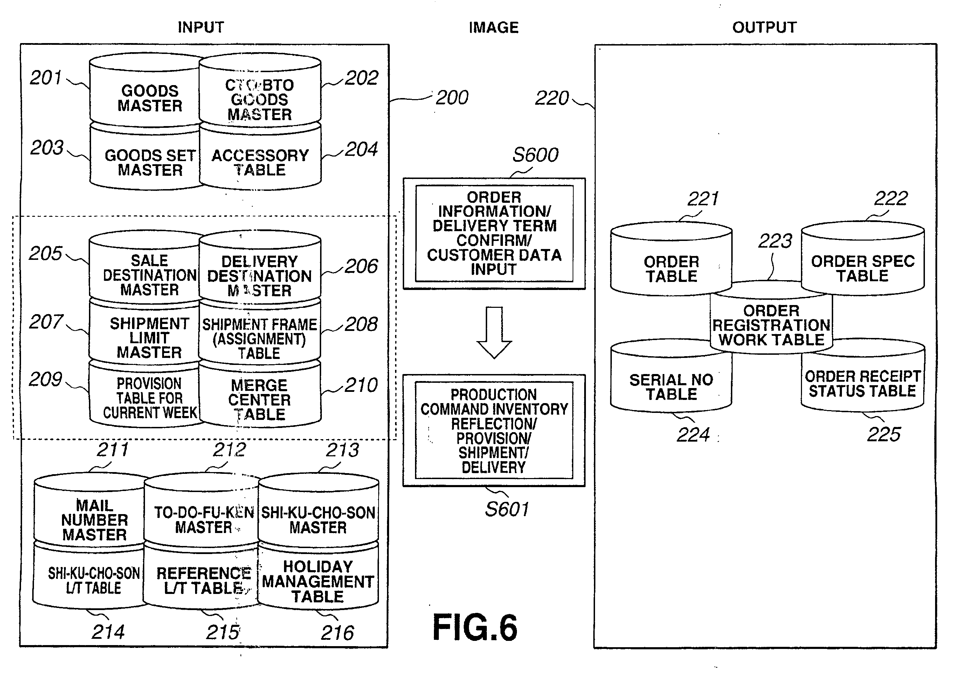

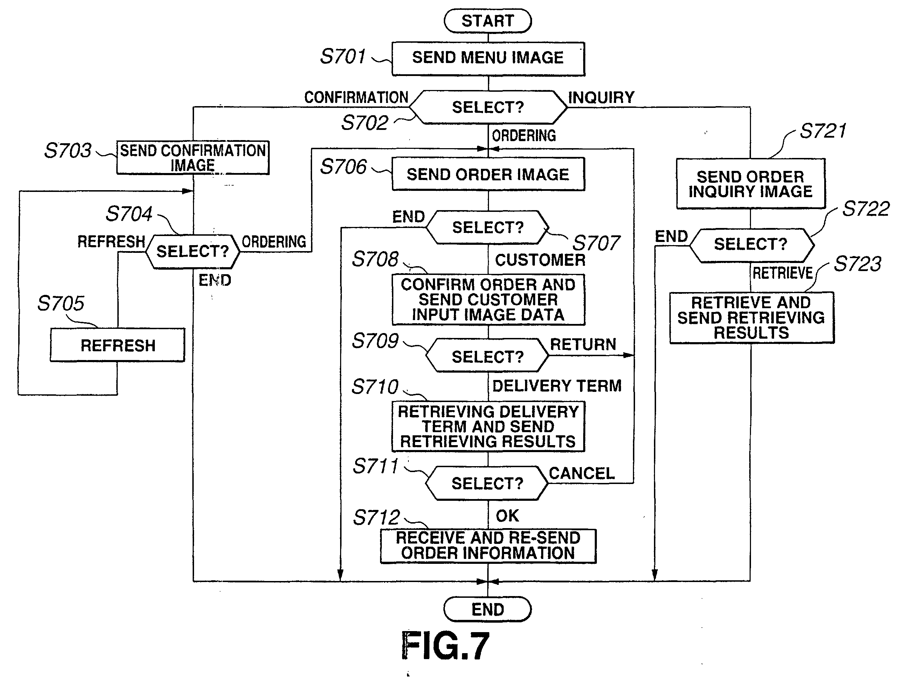

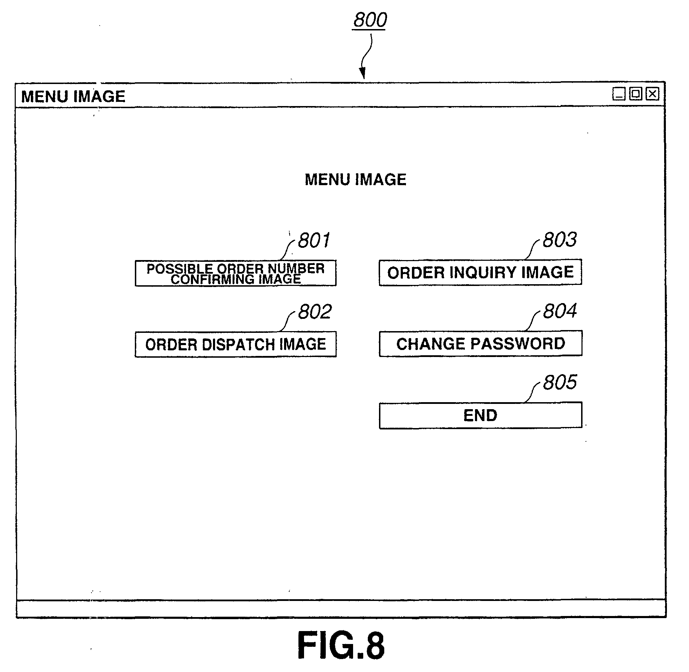

Fig.5 shows the structure of the commodity selling device or the order booking device for commodities, making up the server of the circulation management center in the first embodiment of the present invention. Fig.6 illustrates a data image of data necessary for inputting the order information, information on the term of delivery or the customer information, and data in a table necessary for production command, inventory reflection, provisioned shipment and delivery, as obtained from the input information. Fig.7 is a flowchart executed in the commodity selling device or the order booking device for commodities in the server. Figs.8 to 17 show images displayed in the selling store during processing in the goods selling device or in the device for booking orders for commodities.

Referring to Fig.5, a server 120 of the circulation management center 12 is connected to a computer 160 of the selling store 16K over Internet 11.

The server 120 includes a first goods selling device 120a, a second goods selling device 120b and a device for booking an order for goods 120c.

When the computer 160 of the selling store 16K intends to input the order information, delivery term confirmation or the customer information, the server 120 of the circulation management center 12 references a set of master tables 200.

The set of master tables 200 is made up of a master for goods 201, a CTO (Custom-to-Order)/BTO (Build-to-Order) goods master 202, a goods set master 203, an accessory table 204, a sale destination master 205, a delivery destination master 206, a shipment frame master 207, a shipment frame (assignment) table 208, a table for provision for current week 209, a merge center table 210, mail number master 211, a to (metropolis)- do-fu-ken (prefecture) master 212, shi (city)-ku (ward)-cho (town)-son (village) master 213, a shi-ku-cho-son L/T master 214, a reference L/T table 215 and a holiday management table 216.

Turning to the masters and tables, forming the set of master tables 200, the master for goods 201 has stored therein a commodity code, day-of-the-year and month-of-the-year and year of management, day-of-the-year and month-of-the-year and year of end of the day-of-the-year and month-of-the-year and year of management, JAMPS commodity code, substrate management division, and other information. The OTO/BTO commodity master 202 has stored therein the customer-to-order-data, as the information pertinent to self-complete commodity and the build-to-order data, as the information pertinent to a commodity made up of a relatively large quantity of component commodities.

The set commodity master 203 has stored therein the set commodity code, a constituent commodity code, day-of-the-year and month-of-the-year and year of management, day-of-the-year and month-of-the-year and year of end of the day-of-the-year and month-of-the-year and year of management, quantity of constituent parts, attributes and other information. The accessory table 204 has stored therein the commodity code, day-of-the-year and month-of-the-year and year of management, day-of-the-year and month-of-the-year and year of end of the day-of-the-year and month-of-the-year and year of management, JAMPS commodity code, substrate management division, and other information, concerning the accessory..

The sale destination master 205 has stored therein the transaction counterpart code, day-of-the-year and month-of-the-year and year of management, day-of-the-year and month-of-the-year and year of end of the day-of-the-year and month-of-the-year and year of management, date of commencement of transaction, telephone number, deadline date, addresses, mail numbers, codes of business sites in charge and other information. The delivery destination master 206 has stored therein the name, address, mail number, telephone number and other information. The shipment frame master 207 has stored therein the shipment frame code, day-of-the-year and month-of-the-year and year of management, day-of-the-year and month-of-the-year and year of end of the day-of-the-year and month-of-the-year and year of management, code for master shipment frame, sorts of organization, name of organization, level number and other information. The shipment frame (assignment) table 208 has stored therein the information pertinent to assignment of shipment frames. The table for provision for current week 209 has stored therein the quantity of commodities provisioned for the current week. The merge center table 210 has stored therein the information pertinent to the merge center.

The mail number master 211 has stored therein the relationships between the mail numbers and addresses. The to (metropolis)- do-fu-ken (prefecture) master 212 has stored therein the information pertinent to the to (metropolis)- do-fu-ken (prefecture) (administrative divisions). The shi (city)-ku (ward)-cho (town)-son (village) master 213 has stored therein the information pertinent to shi (city)-ku (ward)-cho (town)-son (village) (administrative divisions). The shi (city)-ku (ward)-cho (town)-son (village) L/T master 214 has stored therein the information pertinent to addresses and buildings. The reference L/T table 215 and the holiday management table 216 has stored therein the information required for management.

When the order information, confirmation of the term of delivery or the customer information is sent from the computer 160 of the selling store 16K to the server 120 of the circulation management center 12 (S600), the server 120 of the circulation management center 12 references the set of master tables 200 to execute the first commodity sale program or the second program to acquire the outputs such as production commands, inventory reflection, provision shipment or delivery (S601).

The server 120 of the circulation management center 12 issues and memorizes the so produced outputs as a set of tables. Should an order inquiry be made-from the computer 160 of the selling store 16K, the server 120 of the circulation management center 12 responds as it references the set of tables 220.

Meanwhile, this set of tables 220 is made up of an order table 221, an order details table 222, an order registration worktable 223, a serial number (NO) table 224 and an order receipt table 225.

Turning to the contents of the respective tables, making up the set of tables 220, the order table 221 stores the information pertinent to orders. The order details table 222 stores the detailed information pertinent to orders. The order registration worktable 223 registers the order information and stores the information used for delivery or scheduled production. The serial number (NO) table 224 stores the serial numbers in the order accepting sequence.

The order receipt table 225 has stored therein the information of the database for details 110 shown in Fig.4 (such as for Mr.○○, term of delivery of ○/Δ, shipped from plant as of a certain × day of certain ^{○}month, shipped from merge center (MC) as of a certain × day of certain ○ month and delivered as of a certain × day of a certain ^{○} month).

Referring to Figs.7 to 17, the specified operation of the server 120 of the circulation management center 12 is explained in detail.

When the computer 160 of the selling store 16K is connected over the Internet 11 to the server 120 of the circulation management center 12, the server 120 of the circulation management center 12 causes the computer 160 of the selling store 16K to execute the menu image transmitting processing (S701). This demonstrates a menu image 800, shown in Fig.8, in the display of the computer 160. The menu image 800 is made up of a button for confirming the quantity of possible orders 801, a button for an order placing image 802, a button for an order inquiring image 803, a password change button 804 and an end button 805. It is noted that the password change button 804 is used for changing the password and the end button 805 is used for terminating the processing. These are not directly relevant to the present invention and hence are not explained specifically. The server 120 of the circulation management center 12 is referred to below simply as the server 120 and the computer 160 of the selling store 16K 12 is referred to below simply as the computer 160.

The server 120 which has transmitted the menu image 800 is in a state of awaiting an input from the computer 160 (S702).

It is assumed that, in the computer 160, the button for confirming the quantity of possible orders 801, button for order placing image 802 or the button for order inquiring image 803 is pressed. This information is sent from the computer 160 over Internet 11 to the server 120.

The server 120, which has received the information, verifies the information (S702).

### (operation of verifying the quantity of possible orders).

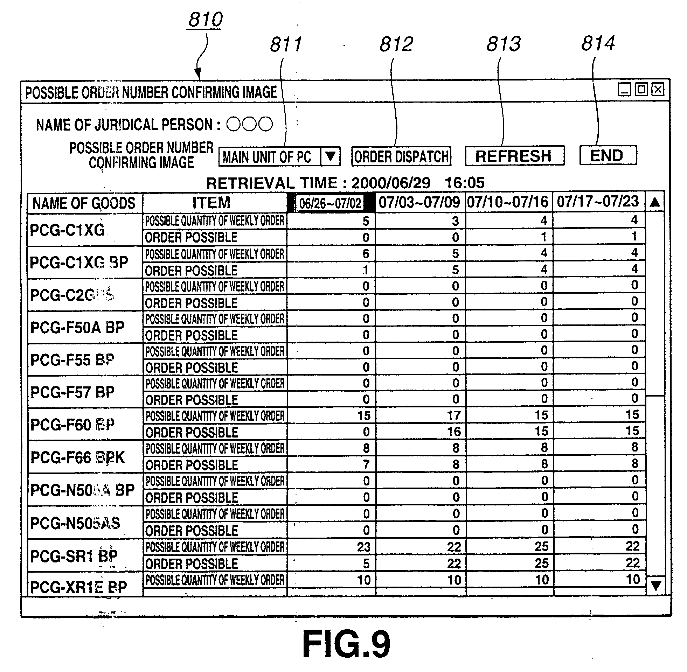

The operation of confirming the quantity of possible orders is now explained. If the contents verified-by the server 120 is the button for confirming the quantity of possible orders 801 (S702, confirmation), the server 120 executes the processing of transmitting the data of the image of confirming the quantity of possible orders, having the contents shown in Fig.9, to the computer 160 over the Internet 11 (S703). This demonstrates an image for confirming the quantity of possible orders 810 shown in Fig.9 in the display of the computer 160. The image for confirming the quantity of possible orders 810 is made up of a commodity display window 811, demonstrating the names of the commodities in a pull-down style, an order placing button 812, a refresh button 813 and an end button 814.

The server 120, which has completed the transmitting processing (S703), is in a state of awaiting an input from the computer 160 (S704).

In the computer 160, when the image for confirming the quantity of possible orders 810 is displayed, the names of goods and the quantities of the week-based possible orders are demonstrated on the week basis for four weeks. Similarly, the quantity of possible orders is demonstrated on the week basis for four weeks. The sale clerk is in a position of suggesting the delivery terms by consulting these quantity of possible orders.

If the button demonstrated on the display of the computer 160 is pressed, this information is sent over the Internet 11 to the server 120.

The server 120 verifies the transmitted information (S704). If the server 120 has verified that the order placing button 812 of the image for confirming the quantity of possible orders 810 has been pressed (S704, ordering), the processing shifts to order placing image processing (S706).

If the server 120 has verified that the refresh button 813 of the image for confirming the quantity of possible orders 810 has been pressed (S704, refresh), the server 120 sends the latest image data of confirming the quantity of possible orders over the Internet 11 to the computer 160. This demonstrates the latest image for confirming the quantity of possible orders 810 on the display of the computer 160.

The reason is that if, when there are plural sale stores of the same company, a certain sale store has captured the image data for confirming the quantity of possible orders to its computer at 10 a.m. and checks for the term of delivery at 3 p.m. in the image for confirming the quantity of possible orders 810 as valid at 10 a.m., but another sale store placed an order at 11 a.m., the real quantity of possible orders differs from the quantity of possible orders displayed as of 3 p.m. at the first-stated sale store, and hence it is necessary to capture the latest data of confirming the quantity of possible orders to prevent this inconsistence from occurring.

The server 120 is again in a state of awaiting an information input from the computer 160(S704). Of course, the server 120 is not simply awaiting the information transfer from the computer 160 and proceeds to this processing (S705) only when an access is made from the computer 160. Otherwise, the server may be executing other processing operations (hereinafter the same).

When fed with the end information as input from the computer 160(S704, end), the server 120 finishes the processing.

### (Order Placing Operation)

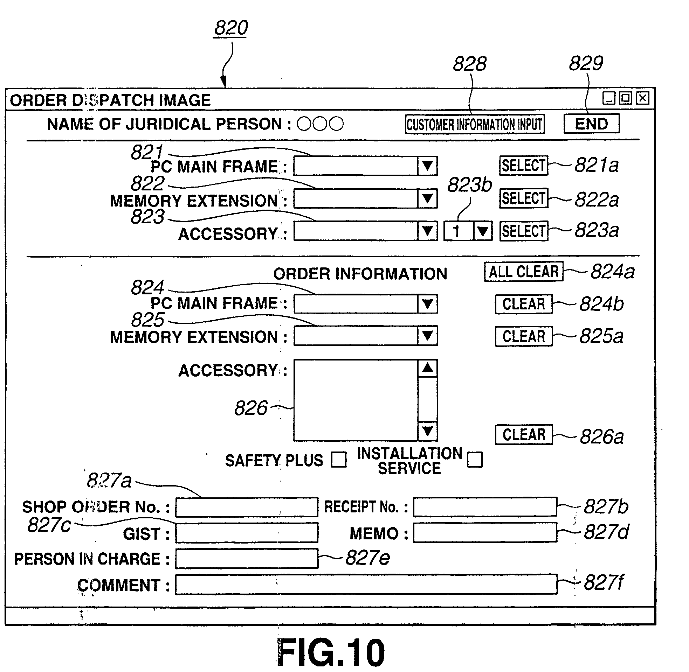

The order placing operation is now explained. First, if the contents verified by the server 120 are the button for order placing image 802(S702, placing an order), the server 120 executes the processing of transmitting data necessary for order placement, with the contents shown in Fig.10, over the Internet 11 to the computer 160 (S706). This causes an order placement image 820, shown in Fig.10, to be indicated on the display of the computer 160.

The order placement image 820 includes a commodity display window 821, in which to display the main body unit of the personal computer (POWER CONSUMPTION) in a pulldown style, a memory extension specifying window 822, an accessory specifying window 823, selection buttons 821a, 822a, 823a, and a quantity button 823b. The order placement image 820 also includes, as the order information, a POWER CONSUMPTION main body unit display window 824, a memory extension display window 825, an accessory display window 826, an all-clear button 824a, a POWER CONSUMPTION main body unit clear button 824b, a memory extension clear button 825b, and an accessory clear button 826a. The order placement image 820 also includes a store order quantity input window 827a, a ticket quantity input window 827b, an application input window 827c, a memorandum input window 827d, a stuff input window 827e, a comment input window 827f, a customer information input specifying button 828 and an end button 829.

The server 120, which has finished the transmission processing (S706), is in a state of awaiting the inputting from the computer 160 (S707).

Meanwhile, the server 120 is able to reference data which has finished operation verification of respective products stored in the accessory table 204 of the set of master tables 200, so that, if an equipment that cannot be connected is specified, the equipment is not displayed, and so that, if an equipment which might prove excessive, an announcement can be made by way of a caution that the equipment in question is excessive.

The POWER CONSUMPTION main body unit is displayed in the pulldown style in the commodity display window 821 as the display of the computer 160 is viewed. If memory extension is needed, a memory to be extended may be displayed in a pulldown style in the memory extension specifying window 822 and, if an accessory is needed, the accessory needed is displayed in a pulldown style in an accessory specifying window 823.

The server 120 captures the information and refrains from data transmission so that no memories that cannot be connected will be displayed, and so that, in case of impending over-equipment, such effect will be announced.

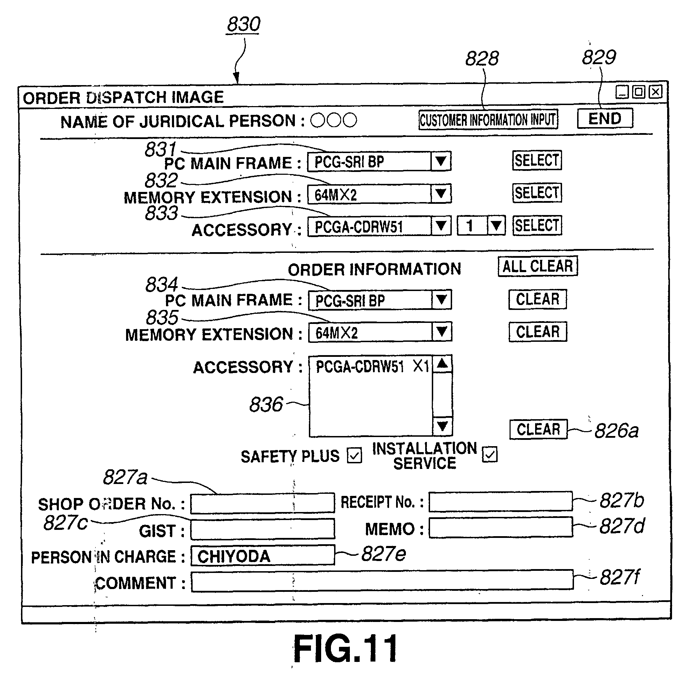

If the inputting of necessary items to the computer 160 is finished using the keyboard of the mouse, the computer 160 transmits the input items to the server 120, which server 120 re-transmits the received order information to the computer 160. This demonstrates the names of the respective commodities in a commodity display window 831, a memory extension specifying window 832 and in an accessory specifying window 833 of the order placing image 830 shown in Fig.11.

If the selection buttons 821a, 22a, 823a are pressed, the names of the respective goods are displayed in a POWER CONSUMPTION main body unit display window 834, a memory extension display window 835 and an accessory display window 836, depending on the pressed state, as shown in Fig.11.

In the computer 160, the keyboard is acted on, as the display is viewed, to input a staff name in the staff input window 827e.

It is assumed that the keyboard or the mouse is acted on as the order placing image 830 is viewed, such that the customer information input specifying button 828 on the order placing image 830 is pressed. This information is sent over the Internet 11 to the server 120.

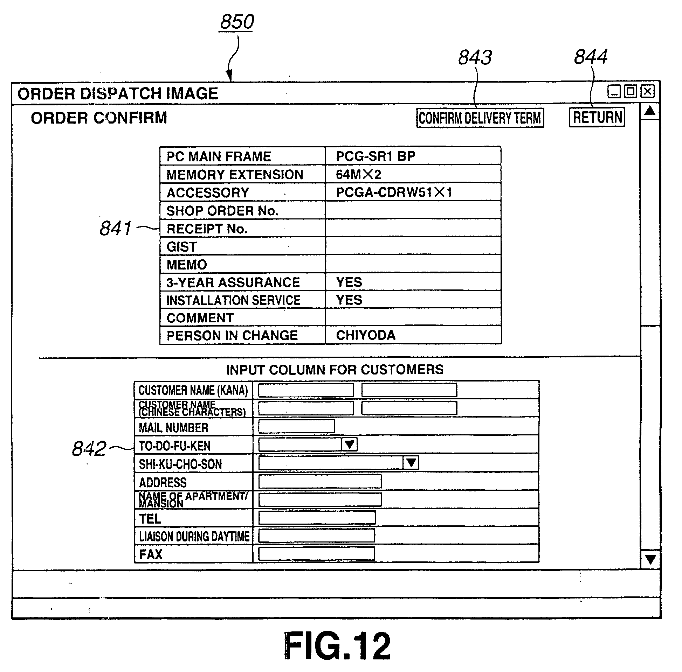

On receipt of this information (S707; customer), the server 120 transmits the order confirming and customer information inputting image data over the Internet 11 to the computer 160 (S708). This demonstrates an order confirming customer information inputting image 840 on the display of the computer 160, as shown in Fig.12.

This order confirming customer information inputting image 840 is made up of an order confirmation image 841 and an upper portion and a customer entry image 842, a delivery term confirming button 843 and a return button 844, at a lower portion, as shown in Fig.12. The customer entry image 842 is configured such as to permit entry of a customer name (in kana and kanji characters), mail number, to-do-fu-ken, shi-ku-cho-son, address, names of apartment or mansion, telephone numbers, diurnal contact site, or fax number, as shown in Fig.12.

In the computer 160, the customer information is input to a customer input image 842, using e.g., a keyboard, as the order confirming customer information inputting image 840 of Fig.12, demonstrated on the display, is viewed.

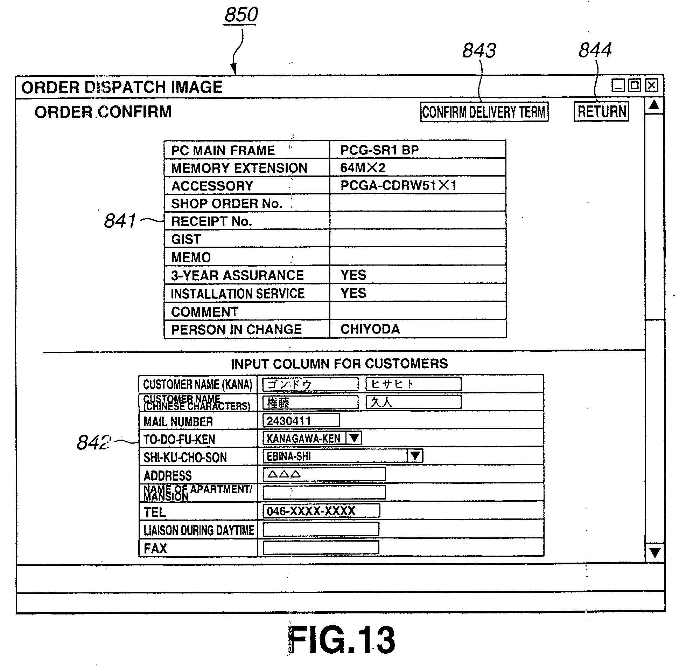

On the display of the computer 160, the customer information is being input, as shown in Fig.13. If a delivery term confirming button 843 on an order confirming customer information inputting image 850 of Fig.13, demonstrated on the display of the computer 160, is pressed, the corresponding information is sent to the server 120.

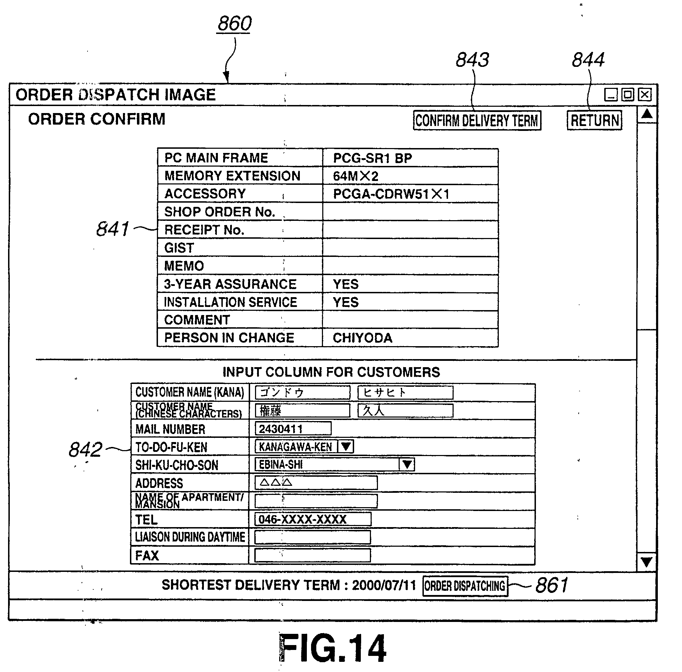

On receipt of this information (S709; delivery term), the server 120 references the shipment frame master 207 of Fig.6 to retrieve the term of delivery of the POWER CONSUMPTION main body unit or other goods to execute the processing of sending the retrieved results and data required for ordering to the computer 160 over the Internet 11(S710) to await reception (S711). On the display of the computer 160, there is demonstrated an order confirming image 860 shown in Fig.14.

In the order confirming image 860, the shortest delivery term of, for example, 'July 11, 2000' is displayed in a lowermost portion of the image, whilst an ordering button 861 is displayed.

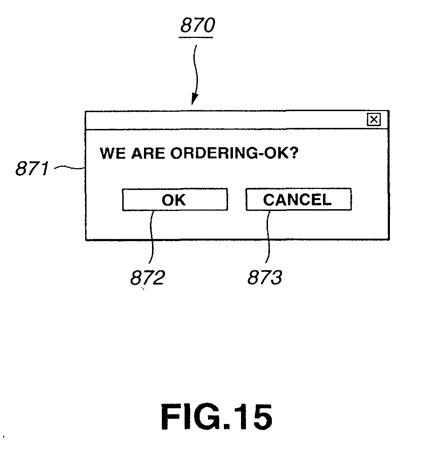

If the ordering button 861 of the order confirming image 860 is pressed by the mouse of the computer 160, the computer 160 changes the picture based on data that indicates the feasibility of the order placing processing to display an image 870 shown in Fig.15. This image 870 is made up of a display portion 871 reading: 'We are ordering···OK?', an OK button 872 and a cancel button 873.

If the OK button 872 is pressed, the computer 160 sends the information over the Internet 11 to the server 120.

On receipt of the ordering information (S711; OK), the server 120 changes the order information to a preset form for storage thereof in a preset master or table of the set of tables 200. The server 120 re-transmits the stored order information over the Internet 11 to the computer 160 (S712) to terminate the processing.

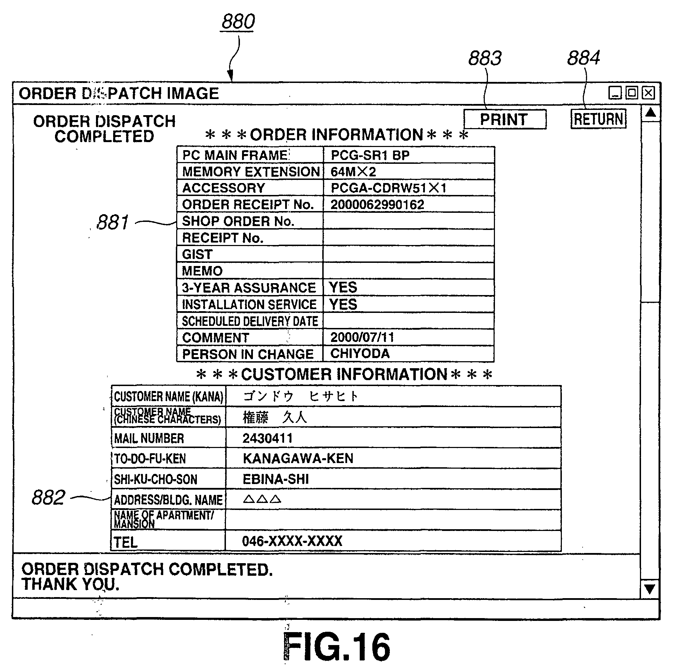

This demonstrates an order placement completion image 880 of Fig.16 on the display of the computer 160. The order placement completion image 880 is made up of an order information image 881, a customer information image 882, a print button 883 and a return button 884.

When a print button 883 is pressed, the computer 160 prints out the information of the image in a preset style. If the return button 884 is pressed, the computer transmits the information to the server 120.

On receipt of the information, the server 120 returns to step S706. If, in the order confirming customer information inputting image 840 to the order confirming image 860, the return button 844 is pressed, the server 120 returns to step S706.

If the cancel button 873 of the image 870 of Fig.15 is pressed, the server 120 detects it (S711; cancel) to return to step S706. If the end button 829 is pressed, the server 120 detects it (S707; end) to finish the processing.

### (Order Inquiry Operation)

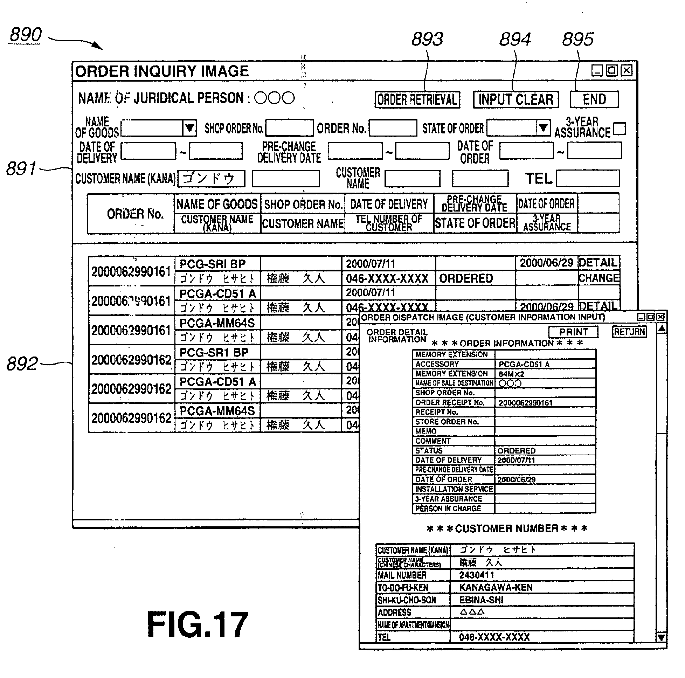

An order inquiry operation is now explained. If the contents as verified by the server 120 are the button for order inquiring image 803 (S702; inquiry), the server 120 transmits order inquiry image data, having the contents shown in Fig.17, to the computer 160 over the Internet 11 (S721). This demonstrates an order inquiry image 890, shown in Fig.17, on the display of the computer 160. In the order inquiry image 890, an input picture 891 is arrayed at an upper portion, an order hysteresis image 892 is arrayed in the mid to lower portions, and an order retrieval button 893, an input clear button 894 and an end button 895 are arrayed in a right upper portion.

The server 120, which has finished the transmission processing (S721), is in a state of awaiting an input from the computer 160 (S722).

If 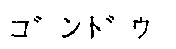 (uttered as 'gondou') is input in an input window of the customer's name (in kana) of the order inquiry image 890, using the keyboard of the computer 160, and the order retrieval button 893 is pressed, the information is transmitted over the Internet 11 to the server 120.

On receipt of the information (S722; retrieve), the server 120 retrieves e.g., the delivery destination master 206 of the set of master tables 200 of Fig.6 to take out the totality of the information concerning 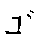 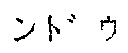 'gondou' to transrnit the information over the Internet 11 to the computer 160 (S723) to terminate the processing.

If the end information is sent from the computer 160 (S722, end), processing is terminated.

Meanwhile, if a portion 'details' of a column in a table of the order hysteresis image 892 is pressed, the computer 160 displays a detail image 900 of the order hysteresis pertinent to the column in superimposition on the order inquiry image 890. If the input clear button 894 is pressed, the computer 160 clears the information input to the input image 891.

### (6) Recording Medium Holding a Commodity Sale Program and a Commodity Order Booking Program

By furnishing a recording medium, holding a first commodity sale program according to the first embodiment, a recording medium, holding a second commodity sale program according to the second embodiment, and by furnishing a recording medium, holding a commodity order booking program according to the third embodiment, for having the respective programs installed on the various computers from these recording mediums, the first or second goods sale device or the goods order booking device can be implemented on the various computers.

The recording medium may be exemplified by, for example, a floppy disc, a hard disc, a magneto-optical disc, a CD-ROM, a CD-R, a CD-RW, a DVD, a magnetic tape, a ROM cartridge, a RAM memory card with a battery backup, a flash memory cartridge and a non-volatile RAM card.

The recording medium may also be a communication medium, such as wired communication medium, e.g., telephone network, or a radio communication medium, such as micro-waves. Of course, the recording medium encompasses the Internet. The recording medium means such a medium as holds the information, mainly the digital data or programs, or any other mediums, provided that the recording medium used is such as has the computer or the dedicated processor fulfil preset functions (hereinafter the same).

Thus, according to the first to third embodiments of the present invention, it is possible to promote services rendered to the individual customers, to remove the loss of sale opportunity, prompt the customer to purchase goods and to evade the inventory risk as well as to enable optimum production of goods.

In the first to third embodiments of the present invention, it is possible to increase the amount of sale by upgrading the services rendered in the store as well as to improve cash flow through reduction of the inventory risk.

In the first to third embodiments of the present invention, if, in the absence of the inventory of a commodity with the store or the manufacturer, a customer visiting the store intends to purchase the commodity, and expresses such intention through the store, the customer is able to acquire the information pertinent to the delivery term of the goods and the quantity of the goods that can be ordered under such delivery term, from the sale store. Thus, the sale store is in a position to suggest a reliable term of delivery to the customer.

On the other hand, the customer is able to decide his or her will in making purchase or reservation, taking the so suggested delivery term into consideration.

In the first to third embodiments of the present invention, the order information, formulated on the basis of the goods purchasing request, as accepted from the customer under the presented delivery term, is acquired from the sale store, and the ordered goods may be commanded to be shipped to the customer within the presented term of delivery, based on the so acquired order information, so that the goods can be directly shipped from the plant to the customer and hence the sale store is able to make sale without having the inventory. The result is that the inventory risk can be evaded and hence the fund circulation may be prevented from worsening.

### (7) Explanation of common structure to the fourth to sixth embodiments

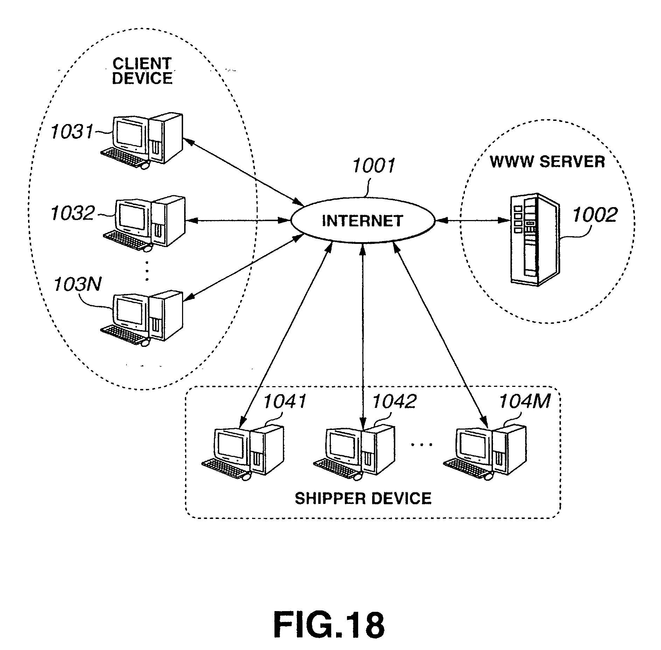

Fig.18 is a block diagram showing the structures of a variety of hardware connected to the commodity information furnishing device and the device for booking the orders for commodities according to fourth to sixth embodiments of the present invention.

Referring to Fig.18, the commodity information furnishing device and the commodity order booking device of the present embodiment are formed by a WWW (World Wide Web) server 1002. This WWW server 1002 is connected to the Internet 1001. The WWW server 1002 can be connected to optional client devices 1031, 1032, ···, 103N and to goods shipper devices 1041, 1042, ···, 104M over the Internet 1001. It should be noted that the reference numerals 103N and 104M are used to generically denote the client device and the goods shipper device, respectively.

The Internet 1001 is a network formed by a large number of computers and computer networks, these computers being connected together through communication links. By the computers being interconnected over the Internet 1001, the information can be exchanged between the respective computers, using various services, such a E-mail, gopher or WWW (World Wide Web).

In the present embodiment, the commodity information furnishing device and the commodity order booking device interconnect the client device s103N and the goods shipper devices 104M over the Internet 1001. However, the computers may also be interconnected using a variety of communication means other than the Internet, such as LAN (Local Area Network), Intranet, Extranet, personal computer communication or communication exploiting dedicated networks.

Moreover, the above-mentioned communication, employing or not employing the Internet 1001, encompasses not only the communication exploiting wired means but also the communication partially or wholly exploiting radio means. For example, the communication may use a radio path partially or entirely, as in the case of portable telephone of PHS (Personal Handy-phone System).

The WWW server 1002, also termed Web server or Web site, furnishes WWW services on the Internet, and has Web pages, such as a variety of text or graphics information, stored on a hard disc provided in its inside.

The various WWW resources, such as WWW server 1002 or Web pages, can be uniquely identified by URL (Uniform Resource Locator), which is an addressing technique for identifying the resources on the Internet 1001.

Between the client device 103N, commodity shipper device 104M and the WWW server 1002, connected to the Internet 1001, various information, such as URL of the Web page, desired to be browsed, or the various information, such as Web pages, can be exchanged in accordance with a preset transfer protocol, such as HTTP (Hyper Text Transfer Protocol).

The respective client devices 103N and the various goods shipper devices 104M are on the same level with respect to the Internet 1001 and the WWW server 1002. That is, the respective client devices 103N and the various goods shipper devices 104M operate as computers for the side exploiting the services offered by the WWW server 1002. Thus, the respective client devices 103N and the various goods shipper devices 104M are similar to each other as to the rudimentary construction and operations. Consequently, the following explanation is centered about the structure and the operation of the client device 103N, while the structure and the operation of the goods shipper devices 104M are explained only as to their portions different from the structure and the operation of the goods shipper devices 104M.

The client device 103N and the goods shipper device 104M are each formed by a CPU (Central Processing Unit), a memory device, made up of a storage medium, such as a hard disc device, holding various data and control programs, and an associated driving device, a RAM (Random Access memory), operating mainly as a work area, and a computer system having a communication control device, which is adapted for being connected to and for having communication with various communication means, including the Internet 1001.

The entity employing the client device 103N is the customer intending or contemplating to purchase a commodity, and is in reality a sale store, including a dealer and a discount store, responsible for selling or illustrating the contents of each commodity to the customer, including illustrating not only each commodity alone but also the concerted use thereof with a specified commodity.

The client device 103N in which the customer is the entity of use may be exemplified by a personal computer that can be connected to the Internet 1001, word processor, television receiver (Internet TV or digital TV), portable telephone set, PHS and PDA (Personal Digital Assistants).

Although these variable electronic communication equipment may be used in case the sale clerk of the store is the entity in use, a personal computer is used in a majority of cases.

On the other hand, the entity of use is a broker of the goods shipper device 104M who delivers a commodity for which an order can be placed with the WWW server 1002. Among the commodities that can be ordered in this manner, there are, for example, commodities that act as component parts for the BTO (build-to-order) or CTO (Custom-to-Order) commodities and commodities that can be used in concerted fashion with specified goods (related goods). Specified examples of these include a variety of memory devices, such as a magneto-optical disc or a semiconductor memory card, a power source adapter and a connection cable.

Although any of the aforementioned electronic communication equipment may be used as the goods shipper device 104M, a personal computer is prevalently used.

The goods shipper device 104M is able to browse Web pages relevant to goods usable in concerted fashion with goods in question and to results of verification of the operation of these related goods, for correction, in order to effectuate maintenance of the goods usable in concerted fashion with goods in question as well as maintenance of results of the operation verification of these related goods. That is, if the related goods are to be furnished anew, the information relevant to the goods in question is transmitted to the WWW server 1002 for new registration, while correction may be made of verification of the operation of registered goods with other commodities.

The client device 103N and the goods shipper device 104M transfer the Web page browsing request to the URL of the Web page, desired to be browsed, and to the so specified WWW server 1002, in accordance with a preset transfer protocol, such as HTTP.

The client device 103N, which has transferred the request for browsing, receives the Web page transmitted from the WWW server 1002 to demonstrate the received page on the display. In this manner, the entity in use (user) of the client device 103N or the goods shipper device 104M may be allowed to browse the Web page.

In the client device 103N and in the goods shipper device 104M, a WWW browser for executing the transfer of the Web page browsing request and the display of the received Web page is stored in the internal hard disc devices. Typically, the Web page is defined using HTML (Hyper Text Markup language) or XML (eXtended Markup Language), and is formed using the HTML and XML.

The HTML or XML document uses a variety of identifiers (tags) for controlling the graphics or controlling various other functions. In the HTML document, there may be indicated the linking destination inclusive of the URL of the Web page that can be used in the server 1002, desirous to browse the Web page, or in other WWW servers 1002.

If a request is made to the client device 103N as to Web page perusal, the HTML document is transmitted to the server 1002.

If, as a result of the transfer request, the client device 103N or the goods shipper device 104M has received the HTML document etc transmitted from the WWW server 1002, the client device 103N or the goods shipper device 104M is able to display the Web page, in accordance with the definitions made in the HTML document etc, to permit the entity of use (user) of the client device 103N or the goods shipper device 104M to browse the Web page. (8-1) Furnishment of Goods Information (Fourth Embodiment)

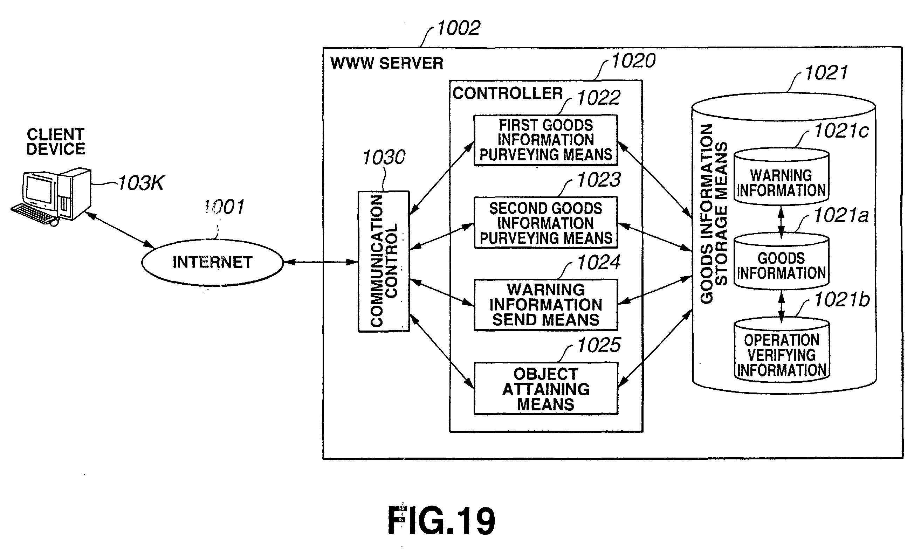

Fig.19 is a functional block diagram for illustrating the functional portions of the goods information furnishing device of the fourth embodiment of the present invention usable for presenting goods to the client device 103N, causing attention instigation, presenting the goods for utilization and purchasing, furnishing the information pertinent to goods usable in concerted fashion, and for furnishing the operation verification information.

In Fig.19, the client device 103K (denoting any optional client device) can be connected to the WWW server 1002 over the Internet 1001.

The WWW server 1002 includes a controller 1020 for performing various control in the present embodiment, commodity information storage means 1021, formed by a mass storage medium, such as a hard disc, and a communication control device 1030 for having communication with other computer(s) over various communication means, such as Internet 1001.

A controller 1020 of the WWW server 1002 includes a RAM operating as a storage area or a work area of e.g., a hard disc, not shown, holding various programs and data. A hard disc of the controlling 1020 holds various programs, such as a commodity information furnishing program. These programs may be executed to realize the operations of first commodity information furnishing means 1022, second commodity information furnishing means 1023, attention instigation information transmission means 1024 and object achieving means 1025.

In the commodity information storage means 1021, there is stored the commodity information 1021a pertinent to various goods that can be ordered to the WWW server 1002. As the commodity information 1021a, various information pertinent to the commodity, including product specifications, such as the name, weight, size or component parts, category, formal type name or date of first sale of the commodity, or the ID (identifier) of the product supplier, is stored. The commodity information storage means 1021 has stored therein the operation verification information 1021b indicating that a regular operation of a commodity may be achieved as another commodity is connected to or mounted on the first stated commodity. As the operation verification information 1021b, there is stored the information for confirming whether or not each commodity stored in the commodity information 1021a is the 'related commodity', that is a commodity usable in concerted operation with another commodity. The 'related commodity' is the commodity that can be connected to a specified commodity by at least one of the direct connection, wireless connection, removable connection, internal mounting and indirect loading. As the operation verification information 1021b, there are stored the information indicating which commodity is related with which commodity as a related commodity, and the information indicating under which of the direct connection and the wireless connection the concerted operation is feasible.

In the operation verification information 1021b, there is also stored the verification information indicating whether or not the regular operation is possible under the connected state, when the connection etc is feasible. As the verification information, there are stored the information indicating that normal operation has been ascertained, the information indicating that no normal operation has been ascertained, the information indicating that no operation has been ascertained depending on conditions, the information indicating the condition for non-operation, and the information that there lacks assurance as to the operation or non-operation.

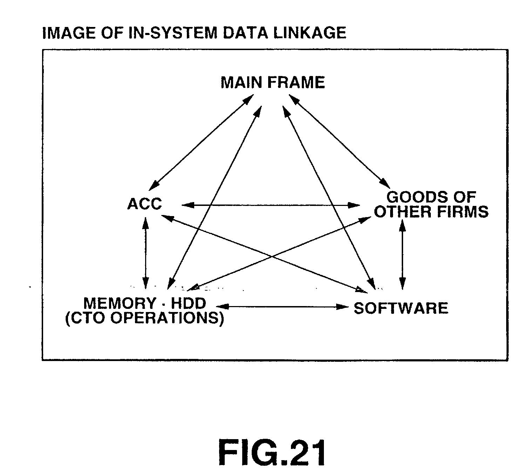

Fig.21 conceptually shows the relationship between the product categories stored in the commodity information and the relationship of operative liaison between the respective commodities in the operation verification information.

As shown for illustration in Fig.21, the main body unit (the main body unit of the personal computer in the present embodiment), 'accessory (ACC)', 'product of other company', 'memory hard disc (HDD)' and 'software' are classified as product categories under equal states. For example, the accessory is equal as to whether or not it is usable in a concerted operation and in a non-master-slave relationship with respect to the main body unit. Although the main body unit of the personal computer is classified as the 'main body unit' and a digital camera or a digital video that can be connected to this main body unit is classified in Fig.21 as an accessory, these are commodities that can be driven independently of each other and hence may be classified under the main body unit.

The product of another company is a commodity furnished by a product supplier who is the entity of use of the goods shipper device 104M.

As shown for illustration in Fig.21, whether or not the totality of the commodities classified under the respective categories can be used in concerted operation, and the state of the operation verification, are stored in the operation verification information 1021b of the commodity information storage means 1021. That is, the commodities for which operation verification therebetween has come to an end are demarcated from those for which operation verification therebetween has not come to an end and the commodities the operation verification of which with respect to a preset specified commodity has come to an end are stored with an operating liaison with the specified commodity.

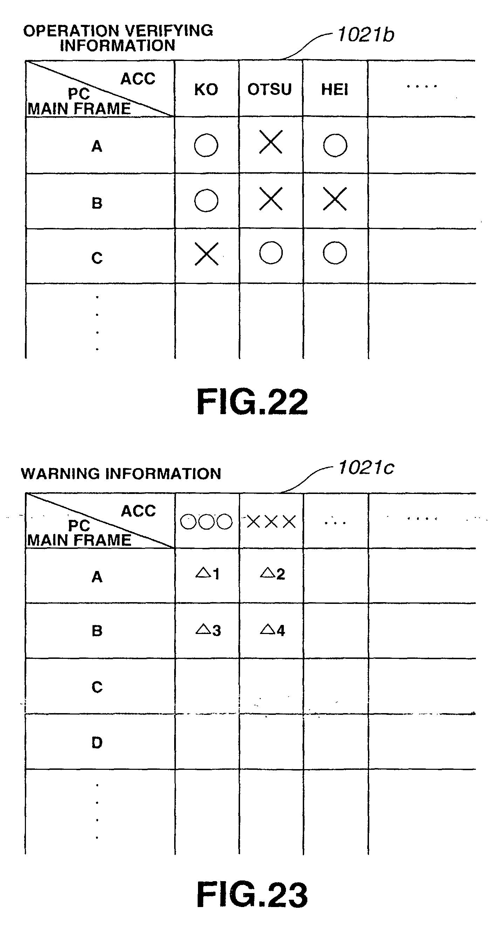

Fig.22 conceptually shoes the contents of the operation verification information 1021b.

Referring to Fig.22, the main body units of the personal computers A, B, C, ··· are plotted along the vertical axis, while accessories ACC Ko, Otsu, Hei, ···, that can be used with the main body units of the personal computers, are plotted on the horizontal axis, with the points of the intersection indicating the usable or unusable states, which states are stored. In Fig.22, '○' and '×' denote the usable and unusable states, respectively. Although the usable state and the unusable state are denoted in this manner, it is the information indicating the usable or unusable state that in reality is stored.

Thus, if the main body unit of the personal computer A is selected, discrimination becomes feasible, such that Ko is usable, Otsu is not usable, Hei is usable, and so on, such that it is sufficient if only the information of the usable accessories (ACC) is taken out and furnished to the client device 103K.

Thus, only the related goods that can be used in a concerted operation are displayed in the client device 103K, so that, if the entity of use of the client device 103K is the customer, he or she may feel free to place an order over the Internet 1001 or purchase the goods at the selling store. If the entity of use of the client device 103K is the sale clerk of the selling store, the sale clerk is in a position to respond optimally to customer's inquiries.

Although the operation verification information 1021b is shown for illustration in Fig.22 between the main body units and the accessories ACC, the relationships between other commodities are also formulated in an equal relationship in a manner as shown in Fig.22.

Although the category-to-category relationship is shown in the operation verification information 1021b in Fig.22, it may also be ascertained whether or not interconnection is feasible between devices of the same category. Thus, in actuality, there is stored the operation verification information (information indicating the usability) of the table form in which the totality of the goods stored in the commodity information 1021a are plotted along the vertical axis and along the horizontal axis of Fig.22. Since there are occasions where two identical commodities may be interconnected in operative liaison with each other, the operation verification information may also be stored between identical commodities.

In the commodity information storage means 1021, there is stored the attention instigation information 1021c.

In the attention instigation information 1021c, there are stored combinations wherein newly selected commodities represent over-equipment with respect to a pre-selected specified commodity, in a manner which permits judgment. The 'over-equipment' herein means duplex provision of the same function.

Fig.23 conceptually shows the contents of the attention instigation information 1021c.

As shown for illustration in Fig.23, there is stored in the attention instigation information 1021c the information of the table form, in which the totality of the goods stored in the commodity information 1021a are plotted along the vertical axis and along the horizontal axis of Fig.23, for indicating whether or not the over-equipment occurs. Since there are occasions where two identical commodities may be interconnected in operative liaison with each other, the operation verification information is stored even between identical commodities.

In the attention instigation information 1021c, there are stored the information indicating whether or not the over-equipment between the respective components occurs at the intersection of the two commodities, and the information for specifying data for commenting on the state of the over-equipment in case the over-equipment prevails. In the illustration of Fig.23, the over-equipment and non-over-equipment are denoted by '○' and by 'Δ', respectively. The mark 'Δ' is followed by a numerical figure indicating the comment number.

For example, such comment reading: 'the newly selected commodity ×× has the same function as that of the pre-selected commodity. Is the selection kept?' corresponding to the form of the variable over-equipment is stored as comment data, not shown, in the commodity information storage means 1021.

In Fig.19, the first commodity information furnishing means 1022 is able to extract the commodity information 1021a, relevant to the specified commodity as requested from the client device 103K over the Internet 1001, such as the name or the type of the main body unit of the computer, from the commodity information storage means 1021, to furnish the so extracted information over the Internet 1001 to the requesting client device 103K. The receipt of the request and transmission of the commodity information 1021a with the client device 103K is through a communication controller 1030 (hereinafter the same).

The second commodity information furnishing means 1023 is able to set a commodity usable in concerted operation with one or more specified goods selected by the client device 103K from the commodity information 1021a furnished by the first commodity information furnishing means 1022, as a related commodity, and to extract the commodity information 1021a pertinent to the related commodity from the commodity information storage means 1021 to transmit the so extracted information to the client device 103K.

The second commodity information furnishing means 1023 is also able to extract only the normalcy operating goods from the operation verification information 1021b to transmit the so selected goods as related commodities to the client device 103K.

The attention instigation information transmission means 1024 verifies whether or not the commodity selected by the client device 103K from the related commodities presented by the second commodity information furnishing means 1023 represents an over-equipment to the pre-selected related commodity. If the commodity represent over-equipment, the attention instigation information transmission means 1024 extracts the attention instigation information 1021c, by way of attention instigation, to send the so extracted information to the client device 103K.

The 'over-equipment' herein means provision of the same function in duplex form. For example, the over-equipment prevails when a personal computer provided with a specified spreadsheet software is a specified commodity and when it is attempted to select and purchase another similar spreadsheet software. The over-equipment also prevails when a power source adapter is co-packaged but the user attempts to select and purchase another power source adapter.

The object achieving means 1025 is able to acquire the objective information specifying the objective of using or purchasing the commodity. The object achieving means 1025 presents by the Web page the using or purchasing objective of the commodity, such as (i) using the commodity for communication, (ii) using the commodity for creative works, or (iii) using the commodity for entertainment, to the client device 103K, to acquire the item as selected by the client device 103K as the objective information. As for the objective information, it is also possible to present the Web page with more detailed classification or the layered Web page in addition to the above Web page given only by way of illustration.

If the objective information is acquired by the object achieving means 1025, the second commodity information furnishing means 1023 extracts the related commodity from the commodity information storage means 1021, with the so acquired objective information as the constraint condition, to transmit the so extracted related commodity to the client device 103K.

Meanwhile, the object achieving means 1025 is the configuration for the fifth embodiment as later explained, while it is unnecessary in the fourth embodiment. (8-2) Operation verification

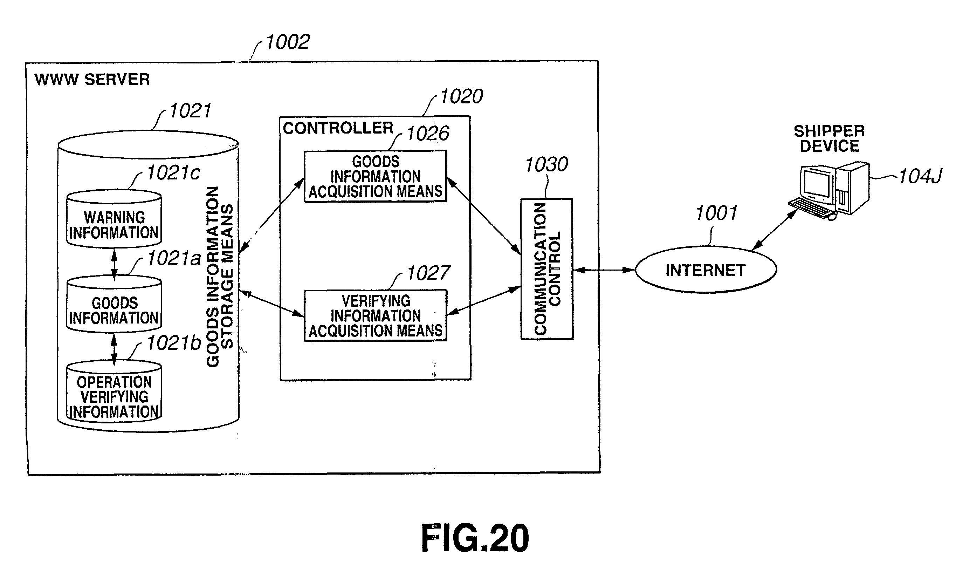

Fig.20 is a functional block diagram for illustrating the functional portion of the goods information furnishing device of the fourth embodiment which is pertinent to maintenance of the related goods and the maintenance pertinent to the operation verification information 1021b for the goods shipper device 104M.

In Fig.20, the goods shipper device 104J, where J is an optional numerical figure, can similarly be connected over the Internet 1001 to the WWW server 1002. The goods shipper device 104J is able to add and correct the commodity information 1021a by the Web page prepared on the basis of the commodity information 1021a and the operation verification information 1021b and which is furnished by the WWW server 1002. Meanwhile, each goods shipper device 104J is able to transmit IDs defined from one goods supplier to another to correct the commodity information 1021a and the verification information only insofar as the commodity furnished by no other than the supplier is concerned.

With the controller 1020 of the WWW server 1002, goods information acquisition means 1026 and verification information acquisition means 1027 may be achieved for the goods shipper device 104M by execution not only of the functions implemented by the first commodity information furnishing means 1022 as explained with reference to Fig.19 but also of the goods information furnishing program.

The goods information acquisition means 1026 acquires the commodity information 1021a pertinent to the goods usable in concerted operation with the goods stored in the commodity information 1021a of the commodity information storage means 1021 from the goods shipper device 104J for storage in the commodity information storage means 1021. By the goods information acquisition means 1026, the commodity information 1021a pertinent to the related goods can be updated to the latest one.

The verification information acquisition means 1027 is adapted to acquire the operation verification information 1021b relevant to the goods stored in the commodity information 1021a of the commodity information storage means 1021 for storage in the commodity information storage means 1021. By the verification information acquisition means 1027, the operation verification information 1021b relevant to other goods can be updated to the latest one.

In the present embodiment, the explanation has been made that 'the commodity information 1021a usable in liaison' or the 'operation verification information 1021b' have been obtained over the Internet 1001 by the goods shipper device 104J. This, however, is not limitative, such that 'the commodity information 1021a usable in liaison' or the 'operation verification information 1021b' stored on a flexible disc (FD) may be received and acquired on driving the FD drive device. The above information may also be acquired by communication means other than the Internet 1001 by the communication controller 1030, such as by radio means, optical cables or CATV. Additionally, the 'the commodity information 1021a usable in liaison' or the 'operation verification information 1021b' stated on paper may be received and input by operation on e.g., a keyboard.

In 'the commodity information 1021a usable in liaison' or the 'operation verification information 1021b', there is stored the information for specifying whether the entity which has executed operation verification is e.g., the goods supplier or the owner of the goods information furnishing device. The aim in view is to locate the responsibility in such a case where operation warrant is given but the operation has resulted in failure.

Since the information relevant to the entity which has executed operation verification is stored in the commodity information storage means 1021 of the WWW server 1002, the second commodity information furnishing means 1023 of the WWW server 1002 is able to send the information relevant to the entity to the client device 103K. Thus, the name and/or the telephone number of the entity of the operation warrant my be indicated on e.g., the lowermost column of the display image of the client device 103K to render inquiries into the manner of operation or the cause of malfunctions feasible.

### (8-3) Presentation of Related Goods

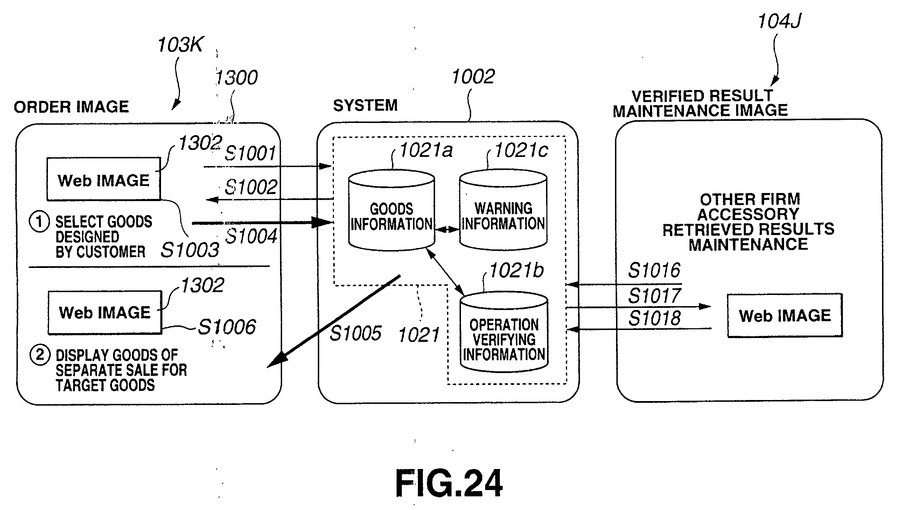

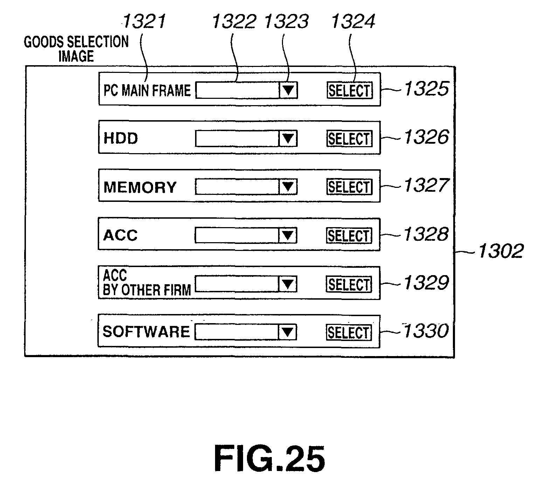

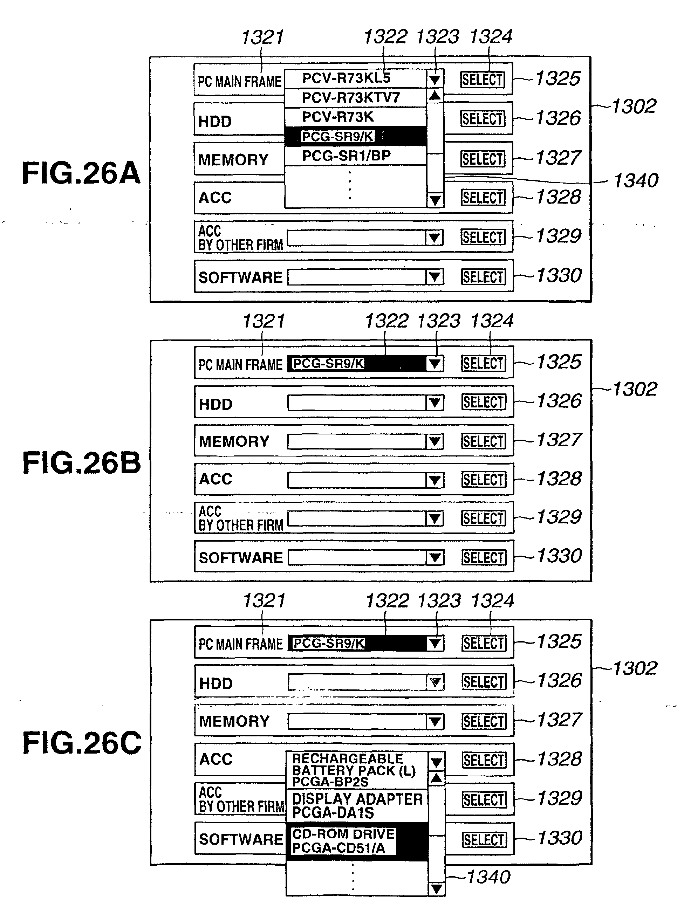

Fig.24 shows the overall and schematic flow of the service image of the above-described fourth embodiment. Fig.25 shows an image of a common portion of the Web page presented from the WWW server 1002 to the client device 103K by the first commodity information furnishing means 1022 and the second commodity information furnishing means 1023, while Figs.26A to 26C illustrate the state of a goods selection image changed responsive to actuation on the client device.

On selection of a transmission request key of the Web image for selecting goods by operations of a customer or a sale clerk, the client device 103K, where K is an optional number, requests the WWW server 1002 to transmit a goods selection image over the Internet 1001 (S1001 of Fig.24).

On accepting this request, the first commodity information furnishing means 1022 of the WWW server 1002 sends the Web image, comprised of a goods selection image shown in Fig.25, to the client device 103K (S1002 of Fig.24).

Thus, the client device 103K receives a Web image 1302, sent from the WWW server 1002 over the Internet 1001, to indicate the so received image as a Web image on a display image 1300 of a display device, such as a display or a liquid crystal device (S1003 of Fig.24).

As shown for illustration on the goods selection image 1302 of Fig.25, the Web image, demonstrated on the display device of the client device 103K (S1003), is made up of a display area 1325 for selecting the main body unit of the POWER CONSUMPTION (personal computer), a display area 1326 for demonstrating a hard disc device HDD, a display area 1327 for indicating a memory, a display area 1328 for displaying an accessory (ACC), a display area 1329 for demonstrating an accessory (ACC) of another company, and a display area 1330 for demonstrating the software. The display areas 1325 to 1330 are provided for each of the goods categories stored in the commodity information 1021a.

Each of the display areas 1325 to 1330 is provided with a category display area 1321, an individual commodity display frame 1322, a pulldown button 1323 and a selection button 1324.

The category display area 1321 demonstrates, in association with the display areas 1325 to 1330, the names of the categories to which the respective goods are classified, that is 'PC main body unit', 'HDD', 'memory', 'ACC', 'ACC of another company' and 'software'.

When the pulldown button 1323 is selected by operation on a mouse or a keyboard, a goods list image is demonstrated in a pulldown style. On this goods list image, the list of goods classified under the category associated with the selected button is transmitted from the WWW server 1002 and displayed. The list of the goods indicate e.g., the names of the goods with or without goods type numbers.

Lacking the goods pre-selected by the selection button 1324, all goods classified under the goods category are displayed in the goods list demonstrated on the goods list image. If there is the pre-selected goods, only related goods having the pre-selected goods as the specified goods are displayed.

On selection of any goods from the goods list displayed on the goods list image, the pulldown image is closed and the names of the selected goods are displayed with or without the goods type number in the individual commodity display frame 1322.

In the present embodiment, this selection of the goods in the goods list image is by left double click of the mouse or by pressing an ENTER key. It is also possible to arrange a selection button in the goods list image and to click this button with a mouse.

The selection button 1324 of the goods selection image 1302 is a button used in selecting the goods demonstrated on the individual commodity display frame 1322 as specified goods.

On selection of this selection button 1324, the tenor of pre-selection is visually indicated in the display area 1325 including the selection button 1324. For example, the display color in the individual commodity display frame 1322 is differentiated from that in the case of non-selection.

Meanwhile, the selection by the selection button 1324 can be canceled. In the present embodiment, if the selection button 1324 is selected, the display for the button is changed from 'select' to 'cancel' and re-selection cancels the selection. Any other suitable method may also be used. For example, the selection may be canceled by selecting a cancel key pop-up displayed on performing a preset operation, such as right click of the mouse or pressing a particular function key in a pre-selected display frame. Alternatively, a cancel button may be arranged within each of the display areas 1325 to 1330.

Figs.26A to 26C show the state of changes in the display state of the goods selection image 1302 in the client device 103K as a result of user's actuation of the client device 103K. Referring to Figs.26A to 26C, the operation of the processing of presenting related goods is explained.

If, in the goods selection image 1302 (Fig.25), received from the WWW server 1002, the user selects the pulldown button 1323, corresponding to the goods category of the goods the user likes, by e.g., mouth click, the client device 103K requests the WWW server 1002 to transmit a goods list for the selected goods category (S1001 of Fig.24).

At a stage in which the request has been accepted by the WWW server 1002, the selection button 1324 has not been selected for any goods, that is there lack related goods. Thus, the first commodity information furnishing means 1022 transmits to the client device 103K a goods list image (Web image) used for displaying a goods list, extracted from the commodity information 1021a, of all goods included in the requested goods category.

On reception of a goods list image 1340, corresponding to the request, the client device 103K demonstrates the image in a pulldown style on the displayed goods selection image 1302, as shown for illustration in Fig.26A. Fig.26A shows, for illustration, the state in which the pulldown button 1323 for the POWER CONSUMPTION main body unit has been selected to display all relevant goods in the goods list image 1340.

If, in this goods list image 1340, the user double-clicks the POWER CONSUMPTION main body unit he or she likes, such as 'PCV-SR9/K', or acts on an ENTER key or a selection key after inversion with a cursor shift key on the keyboard, the goods list image 1340, displayed in the pulldown style, is vanished from the display screen, with the selected goods name 'PCV-SR9/K' then being displayed on the individual commodity display frame 1322.

It should be noted that plural goods instead of one goods may be selected on the goods list image 1340. In case plural goods have been selected, the frame size of the individual commodity display frame 1322 is enlarged and all of the selected goods are displayed in the so enlarged frame.

If the user of the client device 103K selects the selection button 1324 of the display area 1325, the selection of the goods displayed in the individual commodity display frame 1322 is finalized. This state is shown for illustration in Fig.26B. When the selection button 1324 is selected, the individual commodity display frame 1322 of the so elected display area 1325 is displayed in the individual commodity display frame 1322 with a color different from that for other non-selected frames, at the same time as the display of the selection button 1324 is changed from 'serection' to 'cancel'. On selection of the selection button 1324, indicated as 'cancel', the selection is canceled, at the same time as the display color of the individual commodity display frame 1322 is reset to the color for non-selection.

If the pulldown button 1323 of the display area 1325 is selected before selection of the selection button 1324, the image of Fig.26A is again displayed.

If, in the goods selection image 1302, that is the image with the selected goods, of the client device 103K, shown for illustration in Fig.26B, any one of the pulldown buttons 1323, arrayed in the non-selected display areas 1326 to 1330, is selected as a result of the user's selection, the client device 103K requests the WWW server 1002 to transmit a goods list of related goods corresponding to the category of pre-selected goods (S1004 of Fig.24). For example, if, in the image shown in Fig.26B, the pulldown button 1323 in the display area 1328 is selected, the client device 103K requests a goods list of the related goods relevant to the accessories having, as the related goods, the goods 'PCV-SR9/K' selected as the POWER CONSUMPTION main body unit. Responsive to this request, the information pertinent to the pre-selected specified goods is transmitted along with the goods category of the requested goods list.

As to whether or not the goods are specified goods or whether or not the request is for related goods, this is automatically recognized by the client device 103K or by the WWW server 1002, so the user of the client device 103K is able to continue the operation without being conscious of these points.

On acceptance of the transmission requests of the goods list of the related goods, the second commodity information furnishing means 1023 of the WWW server 1002 executes the processing of extracting the related goods, because the specified goods have already been selected.

That is, the second commodity information furnishing means 1023 extracts the related goods for one or more specified goods as received from the client device 103K. The related goods are extracted by extracting, from the operation verification information 1021b, shown in Fig.22, those goods which can be used in concerted fashion with the specified goods and which are proven as to executing the regular operation.

If, for example, 'C' of the POWER CONSUMPTION main body unit is the specified goods, the accessories (ACC) 'Otsu', 'Hei', ···, are extracted from the operation verification information 1021b, shown in Fig.22, as related goods which can be used in concerted fashion and which are proven as to executing the regular operation with the specified goods.

If there exist plural specified goods, the goods proven as to the operation with one of the specified goods are extracted as related goods. In such case, the information indicating the specified goods with which the goods in question are proven as to concerted operation can be added, if so desired.

In the foregoing explanation, the goods which can be used in concerted fashion and which are verified as to executing the regular operation with the specified goods are used as related goods. This, however, is not limitative since any suitable goods that can be used in concerted fashion with the specified goods can be used as related goods. Additionally, the concerted use with or without verified operation can be selected by the client device 103K.

The WWW server 1002 formulates a goods list image of the related goods extracted for the specified goods to transmit the so formulated goods list image to the client device 103K (S1005 of Fig.24).

Thus, the client device 103K receives the goods list image 1340 of related goods. In the goods selection image 1302 of the client device 103K, only the goods that can be used in concerted fashion and that are verified as to operation are displayed in a pull-down style, as shown in Fig.26C.

With the WWW server 1002, the goods list image 1340, listing up only the related goods for the specified goods, is transmitted to the client device 103K, so that, if the user of the client device 103K demonstrating the transmitted image on a screen is the customer, the latter is able to place an order over the Internet 1001 or purchase the goods at the selling store at ease. If the entity of use of the client device 103K is the sale clerk of the sale store, the latter is able to respond optimally and quickly to customer's inquiries.

If, in the goods list image 1340, shown for illustration in Fig.26C, the user selects the commodity he or she likes, for example, 'CD-ROM drive PGGA-CD51/A' in the accessary, the goods list image 1340 disappears and, in its stead, the selected goods are demonstrated in the individual commodity display frame 1322.

On selection by the user of the selection button 1324 of the display area 1328, selection of the goods 'CD drive PGA-CD51/A' demonstrated in the individual commodity display frame 1322 is finalized, such that the individual commodity display frame 1322 is demonstrated with a different color.

Subsequently, the selected goods are handled similarly as specified goods.

### (8-4) Attention Instigation against Over-Equipment

On selection in the client device 103K of the related goods by the selection button 1324, the selection information, indicating the tenor of such selection, is transmitted. The selection information encompasses the pre-selected specified goods, and the information specifying the newly selected goods from among the related goods with respect to the specified goods.

On receipt of the selection information, the attention instigation information transmission means 1024 of the WWW server 1002 verifies, from the attention instigation information 1021c (Fig.23), whether or not the newly selected goods represent over-equipment in relation to the pre-selected specified goods.

It is assumed that, as the pre-selected specified goods, the PC main body unit 'PCV-SR9/K' has been selected in the client device 103K, an accessory 'CD-ROM drive PCGA-CD51/A' is newly selected, as shown for illustration in Fig.26C. Since the 'CD-ROM drive PCGA-CD/A' is an optional device with respect to the PC main body unit 'PCV-SR9/K', there is stored no information indicating the over equipment in the attention instigation information 1021c. That is, since the information '○' indicating that the goods in question are not over-equipment is stored in the column at the intersection of the two goods of the commodity information storage means 1021, shown for illustration in Fig.23, the attention instigation information transmission means 1024 verifies that the two goods are not in the over-equipment relationship to each other, thus not presenting the attention instigation information to the client device 103K.

If the pre-selected specified goods is the PVC main body unit 'PCV-SR1/BP', provided as a standard equipment with the CD-ROM, and the user has newly selected the 'CD-ROM drive PCGA-CD51/A', the attention instigation information transmission means 1024 ascertains that the newly selected equipment is the over-equipment, from the attention instigation information 1021c, to acquire the comment information from the attention instigation information 1021c. It should be noted that the information 'Δ' indicating the over-equipment is stored in the intersection of the two devices. That is, the attention instigation information transmission means 1024 reads out the comment number p contained in the over-equipment information stored at the intersection and reads out the comment text corresponding to the comment number from the attention instigation information 1021c to transmit the so read out comment text to the client device 103K.

The client device 103K, receiving the comment text, is able to display the contents of the comment on the display picture to instigate the attention of the user as to the over-equipment.

The purchaser judges whether or not the goods are to be purchased, as he or she views the comment demonstrated on the display image of the client device 103K, or based on the advice of the sale clerk who viewed the comment. If the purchaser refrains from purchase, he or she is able to cancel the selection by selecting the button 'cancel' from the selection buttons 1324 of the relevant display frames 1325 to 1330 bearing the display 'cancel'. If the over-equipment is tolerated, as when the two identical devices are needed for home and for the company, the displayed comment is discounted to continue the other processing.

### (8-5) Maintenance of the Commodity Information and Operation Verification Information by the Device of the Goods Supplier

The entity of use (user) of the goods shipper device 104J, where J is an optional number, transmits the request for the Web page for maintenance, by the preset transfer protocol, such as HTTP, through the URL of the Web page, here the verification result table, desired to be browsed, or the specified WWW server 1002, over the Internet 1001 (S1016 of Fig.24). The user of the goods shipper device 104J transmits the ID assigned to itself and the subject of maintenance along with the request.

On receipt of the request, the goods information acquisition means 1026 in the WWW server 1002 reads out from the goods information acquisition means 1026 the commodity information 1021a pertinent to all goods delivered from the commodity supplier specified by the received ID, if the subject of maintenance is the commodity information 1021a. The goods information acquisition means 1026 then forms the Web page for maintenance comprised of the commodity information to transmit the so formed Web page to the goods shipper device 104J.

On receipt of the Web page, the goods shipper device 104J corrects the portion of the goods information in need of correction. If newly delivered goods are to be added, the goods shipper device is fed with the goods information for the new goods to send the information to the WWW server 1002.

In this manner, the goods information acquisition means 1026 of the WWW server 1002 acquires the correction information as to the goods information to correct the relevant passage of the commodity information 1021a in accordance with the correction information.

The correction hysteresis is stored. The correction hysteresis stored includes the goods to be corrected, date and time of correction, contents of correction and the corrector ID.

If the subject of maintenance received by the WWW server 1002 is the operation verification information 1021b, the verification information acquisition means 1027 prepares a verification information table for all goods delivered from the goods supplier identified by the received ID and all goods stored in the commodity information 1021a as the Web page for maintenance as a Web page for maintenance. That is, in the case of the table of Fig.22, the verification information acquisition means 1027 prepares a maintenance table including only the goods of the vertical column that have been delivered by the goods supplier, and also including the totality of the goods of the horizontal row, and transmits the resulting table to the goods shipper device 104J.

On receipt of the Web page for maintenance, the goods shipper device 104J rewrites the operation verification information between the commodities, the operation of which has been ascertained, on the Web image, to transmit the so rewritten information to the WWW server 1002.

In this manner, the verification information acquisition means 1027 of the WWW server 1002 acquires the corrected operation verification information and corrects the relevant passages of the operation verification information 1021b in accordance with the correction information.

The correction hysteresis is saved as is the correction of the commodity information 1021a. The correction hysteresis to be saved includes the two goods to be corrected, date and time of correction, contents of correction and the corrector.

In this manner, the latest commodity information and the operation verification information are obtained at all times in each of the information 1021a, 1021b in the commodity information storage means 1021 of the WWW server 1002.

Thus, in the fourth embodiment, described above, only the related goods, verified in operation, are presented in verifying the related goods over the Internet, so that no related goods that cannot be connected nor mounted are presented. There may also be evaded the risk of mistaken presentation of the related goods that can be connected or mounted but which are not verified in operation.

On the store, only the related goods verified in operation can be proposed, by the sale clerk employing the goods information furnishing device, thus evading the risk of mistakenly proposing the related goods that cannot be connected nor mounted or the related goods that can be connected or mounted but which are not verified in operation.

### (9) Acquisition of Using Objectives etc (Fifth Embodiment)

In the fifth embodiment, when the goods information is presented to the client device 103K, the Web image of the goods selection image 1302 is not transmitted at the outset, but it is first asked how the product is to be used, and the equipment is selected which is most suited to the objective in view.

First, the WWW server 1002 transmits to the client device 103K, the objective information, for example, (i) whether the product is to be used for communication, (ii) for creative works, or (iii) for entertainment, as Web image through the Internet 1001 to the client device 103K, and awaits an input.

On the other hand, the client views the Web image demonstrated on the display of the client device 103K and selects one of the (i) communication, (ii) creative work and (iii) entertainment. This information is sent over the Internet 1001 to the WWW server 1002.

On receipt of the information, the object achieving means 1025 of the WWW server 1002 verrfies its contents. For (i) communication, the object achieving means 1025 acquires the object information (communication) as constraint condition and memorizes it. This constraint condition is used in case the first commodity information furnishing means 1022 first sends the commodity information for selecting the specified goods, or in case the second commodity information furnishing means 1023 extracts the related goods for the specified goods. For example, the POWER CONSUMPTION main body unit not having the communication function is excluded from the commodity information and is adapted not to be output from the commodity information 1021a.

If the contents of the acquired information is (ii) creative, the object achieving means 1025 of the WWW server 1002 acquires the objective information (creative) as constraint condition and memorizes it.

The first commodity information furnishing means 1022 and the second commodity information furnishing means 1023 use this constraint condition to transmit the commodity information or to extract the related information to transmit the resulting information to the client device 103K. The POWER CONSUMPTION main body unit carrying a PCU not having the processing capability for video editing is excluded from the commodity information.

In case the contents of the information acquired is (iii) entertainment, the object achieving means 1025 of the WWW server 1002 acquires the objective information (entertainment) as constraint condition and memorizes it.

The first commodity information furnishing means 1022 and the second commodity information furnishing means 1023 use this constraint condition to transmit the goods information to extract the relevant information to transmit the information to the client device 103K.

### (10) Goods Order Booking Device (Sixth Embodiment)

In the present sixth embodiment, the client device 103K is able to order selected commodities to the client device 103K, while the WWW server 1002 is able to book orders of selected goods, in such a manner as to add to the respective processing operations achieved in the fourth embodiment (furnishment of the commodity information, operation verification, presentation of related goods, attention instigation against over-equipment, commodity information by the goods supplier and maintenance of the operation verification information) and/or to the processing operation achieved in the fifth embodiment (acquisition of e.g., objectives of use).

In the present embodiment, an order button is arranged at a right lower end of the goods selection image 1302 transmitted from the WWW server 1002 to the client device 103K (see Fig.25). When the client device 103K has selected this order button, the final confirmation image is displayed. The order placing operation is finished on selecting the OK button. In the final confirming image, a confirming text reading: 'We are ordering a commodity ○○ and a commodity ××. OK?' is displayed.

When the OK button is selected in the final confirming image, the client device 103K transmits the order information on the goods selected by the selection button 1324 to the WWW server 1002.

On receipt of the order placing information by the WWW server 1002, it is acquired by the order booking information acquisition means of the controller 1022.

The goods order means of the WWW server 1002 books the order of the goods in accordance with the order information acquired. Specifically, the order is stored in the order booking management master provided in the commodity information storage means 1021. The information stored in the order booking management master includes the ordered commodities, the quantity of the commodities ordered, date of order booking, ID of the client device 103K or the date of scheduled shipping of goods to complete the order.

On completion of order booking, the WWW server 1002 sends the order booking information to the supplier of the goods ordered to request the goods to be sent. The destination of delivery is e.g., the warehouse specified by the sale store owning the client device 103K.

Meanwhile, in the case of a dealer not having the sale inventory, the ordered goods may be directly shipped to the customer without the intermediary of the dealer. In this case, the ordered goods are indicated on the client device 103K of the dealer store. An input column of the information on the customer purchasing the goods is formed in the Web image in the final confirmation image, with the customer information being transmitted to the WWW server 1002 along with the final confirmation. The customer information includes the various information pertinent to the customer including the customer's name, address, telephone number etc. The customer information pertinent to the addresses and names is utilized as the addresses of the destination of delivery of the commodities.

In the sixth embodiment of the present invention, only the related goods verified as to operation may be selectively purchased in booking the orders for the commodities over the Internet, so that there is no risk of mistaken presentation of related goods that cannot be connected not mounted, while there is no risk of mistaken selective purchasing of related goods that can be connected or mounted but which have not been verified as to operations.

Moreover, in the store, only the related goods verified as to operation can be proposed and sold by the sale clerk employing the goods order booking device, so that it is possible to evade the risk of mistaken proposal or sale of related goods that cannot be connected nor mounted or of related goods that can be connected or mounted but which have not been verified as to operations.

### (11) Recording Medium Holding the Goods Information Furnishing Program

As for the contents of operations, explained in the fourth to sixth embodiments, described above, the programs of the respective operations are stored in the controller 1022 such that the operations proceed in accordance with the so stored programs.

Consequently, at least one or more of the above-described operations (furnishment of the commodity information, operation verification, presentation of related goods, attention instigation against over-equipment, commodity information by the goods supplier, maintenance of the operation verification information and order booking of commodities) may be combined into a program which is stored in the recording medium.

The recording medium may be exemplified by, for example, a floppy disc, a hard disc, a magneto-optical disc, a CD-ROM, a CD-R, a CD-RW, a DVD, a magnetic tape, a ROM cartridge, a RAM memory card with a battery backup, a flash memory cartridge and a non-volatile RAM card.

The recording medium means any suitable medium on which the information, mainly the digital data or programs, is recorded by some means or other, provided that the recording medium is such as has a computer or a dedicated processor realize reset functions.

### Industrial Applicability

The present invention may be applied to a commodity distribution system in which peripherals with respect to main body units, such as computers, may be eclectically adopted to suit to the objective or taste of the customer and in which the main body units may be delivered to the customer in a state carrying these peripherals.

## Claims

1. A commodity selling apparatus for accepting an order of a commodity responsive to a request by a customer to purchase the commodity over a network and for directly shipping the ordered commodity to said customer, comprising:
order information acquisition means for acquiring the order information, prepared on accepting the request to purchase the commodity from the customer, over said network; and
commodity shipping command means for commanding the shipping of the commodity ordered to said customer based on said order information acquired by said order information acquisition means.

2. The commodity selling apparatus according to claim 1 further comprising:
related information transmission means for transmitting the related information of said commodity as an order candidate over said network;
said order information acquisition means acquiring the order information over said network following transmission of said related information by said related information transmission means.

3. The commodity selling apparatus according to claim 2 wherein said related information transmission means includes delivery term presenting means for presenting the term of delivery of the commodity and the quantity of possible orders under said term of delivery, in a confirmable form, responsive to a request from said sale store, to said sale store over said network;
said order information acquisition means acquiring, from said sale store, the order information prepared on accepting the request to purchase the commodity from the customer in accordance with a delivery term presented by said delivery term presenting means, over said network;
said commodity shipping command means commanding the shipping to said customer of the commodity booked on the basis of the order information acquired by said order information acquisition means, within the term of delivery presented by said delivery term presenting means.

4. The commodity selling apparatus according to claim 3 further comprising:
production quantity acquisition means for acquiring the total production quantity per preset period of time of respective commodities, produced in accordance with a production schedule drafted under a preset production schedule sequence;
said delivery term presenting means presenting the delivery term as said preset period of time, with an unbooked fraction of the total production quantity during said preset time period as the quantity of possible orders.

5. The commodity selling apparatus according to claim 3 further comprising:
production quantity acquisition means for acquiring the total production quantity every preset tome period for each commodity produced in accordance with a production schedule drafted under a preset production schedule sequence; and
sale quantity allocation means for deciding the allocation quantity to each sale store of the total production quantity per preset time period, as acquired by said production quantity acquisition means;
said delivery term presenting means presenting the delivery term as said preset period of time, with an unbooked fraction of the total production quantity during said preset time period as the quantity of possible orders.

6. The commodity selling apparatus according to claim 3 wherein said order information acquisition means acquiring the information specifying a commodity as the order information and the information pertinent to the shipping destination of said commodity;
said commodity shipping command means transmitting the information pertinent to the shipping destination of said commodity along with a command for shipping the booked community.

7. The commodity selling apparatus according to claim 3 further comprising:
shipping date transmission means for deciding the shipping date to said customer of the commodity corresponding to the order information as acquired by said order information acquisition means and for transmitting the shipping date to said sale store;
said commodity shipping command means commanding the shipping to said customer at a specified shipping date sent by said shipping date transmission means.

8. The commodity selling apparatus according to claim 2 wherein said related information transmission means including delivery term presenting means for presenting the term of delivery of a commodity and the quantity of possible orders under said delivery term in a confirmable form to a booking terminal connected over a network to said related information transmission means responsive to a request from said booking terminal;
said order information acquisition means acquiring from said booking terminal the order information formulated on the basis of the request by a customer to purchase a commodity under a term of delivery presented by said delivery term presenting means;
said commodity shipping command means commanding the shipping of the booked commodity to said customer within the term of delivery presented by said delivery term presenting means, based on the order information acquired by said order information acquisition means.

9. The commodity selling apparatus according to claim 2 wherein said commodity is formed by a plurality of individual commodities;
said related information transmission means including delivery term presenting means for presenting, responsive to a request from said sale store, the term of delivery of said individual commodities and the quantity of possible orders under said delivery term in a confirmable form to said sale store;
said order information acquisition means acquiring from said sale store the order information formulated on the basis of the request from a customer to purchase the commodity under the term of delivery presented by said delivery term presenting means;
said commodity shipping command means commanding the booked commodity to be shipped to said customer within the term of delivery presented by said delivery term presenting means on the basis of the order information acquired by said order information acquisition means.

10. The commodity selling apparatus according to claim 9 further comprising:
production quantity acquisition means for acquiring the total production quantity per preset time period for each individual commodity produced in accordance with a production schedule drafted under a preset production schedule sequence;
said delivery term presenting means presenting said preset time period as the term of delivery, with an unbooked fraction of the total production quantity during said preset time period as the quantity of possible orders, in a confirmable form to said sale store.

11. The commodity selling apparatus according to claim 9 further comprising:
production quantity acquisition means for acquiring the total production quantity per preset time period for each individual commodity produced in accordance with a production schedule drafted under a preset production schedule sequence; and
sale quantity allocation means for deciding an allocation quantity to each sale store corresponding to a fraction of the total production quantity per preset time period as obtained by said production quantity acquisition means;
said delivery term presenting means presenting said preset time period as the term of delivery, with an unbooked fraction of said allocation quantity to the sale store which has made said purchase request, as the quantity of possible orders during said preset time period, in a confirmable form to said sale store.

12. The commodity selling apparatus according to claim 9 wherein said order information acquisition means acquires the information specifying the individual commodity forming a commodity as the order information and the information pertinent to the shipping destination of said commodity;
said commodity shipping command means transmitting the information pertinent to the shipping destination of said commodity along with a shipping command for the booked commodity.

13. The commodity selling apparatus according to claim 9 further comprising:
shipping date transmitting means for deciding the shipping date to said customer of a commodity corresponding to the order information acquired by said order information acquisition means, with the delivery term of an individual commodity having the latest delivery term of the respective individual commodities making up said commodity as a reference, and for sending said shipping date to said sale store;
said commodity shipping command means specifying the shipping date transmitted by said shipping date transmitting means to command the shipping date to said customer.

14. The commodity selling apparatus according to claim 2 wherein said commodity is formed by a plurality of individual commodities;
said related information transmission means including delivery term presenting means for presenting, responsive to a request from a booking terminal connected over a network, the term of delivery of said individual commodities and the quantity of possible orders under said delivery term, in a confirmable form to said sale store;
said order information acquisition means acquiring from said booking terminal the order information formulated on the basis of the request accepted from a customer to purchase the commodity under the term of delivery presented by said delivery term presenting means;
said commodity shipment command means commanding the booked commodity to be shipped to said customer within the term of delivery presented by said delivery term presenting means on the basis of the order information acquired by said order information acquisition means.

15. A commodity booking apparatus for placing an order for a commodity with a commodity selling device, on the premises that a fee for a purchasing request for said commodity by a customer is paid, the ordered commodity being directly shipped to said customer in accordance with a shipping command of said commodity selling device, comprising:
delivery term acquisition means for acquiring the delivery term of a commodity and the quantity of possible orders under said delivery term in a confirmable form;
order information transmitting means for formulating the order information for a commodity determined to be purchased on the basis of the presentation to said customer of the possible delivery term as acquired by said delivery term acquisition means, and for transmitting the order information to said commodity selling device; and
shipping destination information transmitting means for acquiring the information pertinent to the shipping destination of said commodity to said customer who decided to purchase the commodity, and for transmitting the so acquired information to said commodity selling device.

16. A storage medium used in a commodity selling device accepting an order from a sale store for a commodity based on a request from a customer to purchase said commodity and directly shipping the ordered commodity to said customer, said storage medium holding a computer-readable commodity sale program, said commodity sale program having a computer to realize
a delivery term presenting function of presenting, responsive to a request from said sale store, the delivery term of said commodity and the quantity of possible orders under said delivery term, in a confirmable form;
an order information acquiring function of acquiring from said sale store the order information formulated on the basis of an accepted commodity purchasing request from said customer under the term of delivery presented by said delivery term presenting function; and
a commodity shipping command function of commanding shipment to said customer of the booked commodity within the term of delivery as presented by said delivery term presenting function, based on the order information acquired in said order information acquiring function.

17. The storage medium according to claim 16 wherein the computer-readable commodity sale program stored in the storage medium further has
said computer realize the production quantity acquisition function of acquiring the total production quantity per preset time period for each commodity produced in accordance with a production schedule drafted under a preset production schedule sequence;
said delivery term presenting function presenting said preset time period as the term of delivery, in a confirmable form, with an unordered fraction of the total production quantity per said preset time period as the quantity of possible orders, to said sale store.

18. The storage medium according to claim 16 wherein the computer-readable commodity sale program stored in the storage medium further has
said computer realize the production quantity acquisition function of acquiring the total production quantity per preset time period for each commodity produced in accordance with a production schedule drafted under a preset production schedule sequence; and
the sale quantity allocation function of deciding an allocation quantity to each sale store corresponding to a fraction of the total production quantity per preset time period as obtained by said production quantity acquisition function;
said delivery term presenting function presenting said preset time period as the term of delivery, in a confirmable form, with an unordered fraction of the allocation quantity to the sale store which has made the commodity purchasing request as the quantity of possible orders per said preset time period.

19. The storage medium according to claim 16 wherein said order information acquisition function acquires the information identifying the commodity and the information pertinent to the commodity shipping destination as said order information;
said commodity shipping command function transmitting the information pertinent to the commodity shipping destination along with the command for sending the booked commodity.

20. The storage medium according to claim 16 wherein the computer-readable commodity sale program stored in the storage medium further has
said computer realize the shipping date transmitting function of determining the date of forwarding to said customer of the commodity corresponding to the order information acquired in said order information acquisition function and of transmitting the shipping date to said selling store;
said commodity shipping command function specifying the sending date transmitted by said forwarding date transmitting function to command the commodity to be sent to said customer.

21. A storage medium used in a commodity selling device accepting an order from a sale store for a commodity made up of a plurality of individual commodities as selected by a customer, and directly sending the ordered commodity to said customer, said storage medium holding a computer-readable commodity sale program, said commodity sale program having a computer to realize
a delivery term presenting function of presenting, responsive to a request from said sale store, the delivery term of said individual commodities and the quantity of possible orders under said delivery term, to said selling store in a confirmable form;
an order information acquiring function of acquiring from said sale store the order information formulated on the basis of the commodity purchasing request from said customer under the term of delivery presented by said delivery term presenting function; and
a commodity sending command function of commanding the booked commodity to be sent to said customer within the term of delivery as presented by said delivery term presenting function, based on the order information acquired in said order information acquiring function.

22. The storage medium according to claim 21 wherein the computer-readable commodity sale program stored in the storage medium further has
said computer realize the production quantity acquisition function of acquiring the total production quantity per preset time period for each commodity produced in accordance with a production schedule drafted under a preset production schedule sequence;
said delivery term presenting function presenting said preset time period as the term of delivery, in a confirmable form, with an unordered fraction of the total production quantity per said preset time period as the quantity of possible orders, to said sale store.

23. The storage medium according to claim 21 wherein the computer-readable commodity sale program stored in the storage medium further has
said computer realize the production quantity acquisition function of acquiring the total production quantity per preset time period for each individual commodity produced in accordance with a production schedule drafted under a preset production schedule sequence; and
the sale quantity allocation function of deciding an allocation quantity to each sale store corresponding to a fraction of the total production quantity per preset time period as obtained by said production quantity acquisition function;
said delivery term presenting function presenting said preset time period as the term of delivery, to said sale store, in a confirmable form, with an unordered fraction of the total production quantity per said preset time period as the quantity of possible orders per said preset time period.

24. The storage medium according to claim 21 wherein said order information acquisition function acquires the information identifying the individual commodities making up the commodity and the information pertinent to the commodity shipping destination as said order information;
said commodity shipping command function transmitting the information pertinent to the commodity shipping destination along with the command for sending the booked commodity.

25. The storage medium according to claim 21 wherein the computer-readable commodity sale program stored in the storage medium further has
said computer realize the shipping date transmitting function of determining the date of forwarding to said customer of the commodity corresponding to the order information acquired in said order information acquisition function based on the term of delivery of the individual commodity of the individual commodities making up the commodity having the latest delivery term as reference and of transmitting the shipping date to said selling store;
said commodity shipping command function specifying the sending date transmitted by said forwarding date transmitting function to command the forwarding date to said customer.

26. A storage medium used in a commodity booking device placing an order to a commodity selling device for a commodity on the premises that a fee for a purchasing request for said commodity by a customer is paid, the ordered commodity being directly shipped to said customer in accordance with a shipping command of said commodity selling device, said storage medium holding a computer-readable commodity booking program, said commodity booking program comprising:
a delivery term acquisition function for acquiring the delivery term of said commodity and the quantity of possible orders under said delivery term in a confirmable form;
an order information transmitting function for formulating the order information for a commodity determined to be purchased on the basis of the presentation to said customer of the possible delivery term as acquired by said delivery term acquisition function, and for transmitting the order information to said commodity selling device; and
a shipping destination information transmitting function for acquiring the information pertinent to the shipping destination of said commodity to said customer who decided to purchase the commodity, and for transmitting the so acquired information to said commodity selling device.

27. A commodity selling method in which an order from a booking terminal for a commodity based on a request from a customer to purchase said commodity and in which the ordered commodity is directly sent to said customer, said method comprising:
a delivery term presenting step of presenting, responsive to a request from said booking terminal, the delivery term of said commodity and the quantity of possible orders under said delivery term, in a confirmable form;
an order information acquiring step of acquiring from said booking terminal the order information formulated on the basis of an accepted commodity purchasing request from said customer under the term of delivery presented by said delivery term presenting step; and
a commodity shipping command step of commanding shipment to said customer of the booked commodity within the term of delivery as presented by said delivery term presenting step, based on the order information acquired in said order information acquiring step.

28. A commodity selling method in which an order for a commodity made up of a plurality of individual commodities as selected by a customer is accepted from a booking terminal and in which the commodity so ordered is directly forwarded to said customer, said method comprising:
a delivery term presenting step of presenting, responsive to a request from said booking terminal, the delivery term of the individual commodities and the quantity of possible orders under said delivery term, in a confirmable form;
an order information acquiring step of acquiring from said booking terminal the order information formulated on the basis of an accepted commodity purchasing request from said customer under the term of delivery presented by said delivery term presenting step; and
a commodity shipping command step of commanding shipment to said customer of the booked commodity within the term of delivery as presented by said delivery term presenting step, based on the order information acquired in said order information acquiring step.

29. The commodity selling apparatus according to claim 2 further comprising:
commodity information storage means for holding the commodity information pertinent to a variety of commodities; wherein
said related information transmission means includes first commodity information furnishing means for extracting the commodity information pertinent to a specified commodity as requested by a client device over the network from said commodity information storage means and for furnishing the extracted commodity information to the requesting client device; and
second commodity information furnishing means for extracting from said commodity information storage means the commodity information of one or more related commodities, that is commodities usable in concerted fashion with one or more specified commodity selected by said client device from the commodities furnished by said first commodity information furnishing means, and for transmitting the extracted commodity information to said client device.

30. The commodity selling apparatus according to claim 29 wherein the related commodities that can be used in concerted fashion with said specified commodity are those commodities that allow for at least one of direct connection, radio connection, removable connection, internal connection or indirect mounting thereof with respect to said specified commodity.

31. The commodity selling apparatus according to claim 29 wherein the operation verification information testifying to regular operation of each commodity carrying other commodity or commodities connected or mounted thereto is stored in said commodity information storage means;
said second commodity information furnishing means transmitting regularly operating commodities from said operation verification information as related commodities to said client device.

32. The commodity selling apparatus according to claim 31 comprising:
commodity information acquisition means for acquiring, from a commodity supplier, the information pertinent to commodities usable in concerted fashion with a commodity, the commodity information of which has been stored in said commodity information storage means, for storage of the so acquired information in said commodity information storage means; and
verification information acquisition means for acquiring the operation verification information pertinent to a commodity, the commodity information of which has been stored in said commodity information storage means, from said commodity supplier, for storage of the so acquired information in said commodity information storage means.

33. The commodity selling apparatus according to claim 29 comprising:
attention instigation information transmitting means for transmitting the attention instigation information in case a commodity selected as the related commodity proves an over-equipment with respect to said specified commodity.

34. The commodity selling apparatus according to claim 29 further comprising:
objective achieving means for acquiring the objective information specifying the objective of using or purchasing a commodity;
said second commodity information furnishing means extracting the related commodities, with the objective information acquired by said objective achieving means, as a constraint condition, to transmit the extracted related commodities to said client device.

35. The commodity selling apparatus according to claim 2 further comprising:
commodity information storage means for holding the commodity information. pertinent to a variety of commodities; wherein
said related information transmission means includes first commodity information furnishing means for extracting the commodity information pertinent to a specified commodity as requested by a client device over the network from said commodity information storage means and for furnishing the extracted commodity information to the requesting client device; and
second commodity information furnishing means for extracting from said commodity information storage means the commodity information of related commodities, that is commodities usable in concerted fashion with one or more specified commodity selected by said client device from the commodities furnished by said first commodity information furnishing means, and for transmitting the extracted commodity information to said client device;
said order information acquisition means including order placing information acquisition means for acquiring the ordered commodities and the order placing information transmitted from said client device for the commodities furnished by said first and second commodity information furnishing means; and
commodity booking means for booking commodities in accordance with the order placing information acquired by said order placing information acquisition means.

36. The commodity selling apparatus according to claim 35 wherein the related commodities that can be used in concerted fashion with said specified commodity are those commodities that allow for at least one of direct connection, radio connection, removable connection, internal connection or indirect mounting thereof with respect to said specified commodity.

37. The commodity selling apparatus according to claim 35 wherein the operation verification information testifying to regular operation of each commodity carrying other commodity or commodities connected or mounted thereto is stored in said commodity information storage means;
said second commodity information furnishing means transmitting regularly operating commodities from said operation verification information as related commodities to said client device.

38. The commodity selling apparatus according to claim 35 comprising:
commodity information acquisition means for acquiring, from a commodity supplier, the information pertinent to one or more commodities usable in concerted fashion with a commodity, the commodity information of which has been stored in said commodity information storage means, for storage of the so acquired information in said commodity information storage means; and
verification information acquisition means for acquiring the operation verification information pertinent to a commodity, the commodity information of which has been stored in said commodity information storage means, from said commodity supplier, for storage of the so acquired information in said commodity information storage means.

39. The commodity selling apparatus according to claim 35 further comprising:
attention instigation information transmitting means for transmitting the attention instigation information in case a commodity selected as the related commodity proves an over-equipment with respect to said specified commodity.

40. The commodity selling apparatus according to claim 35 further comprising:
objective achieving means for acquiring the objective information specifying the objective of using or purchasing a commodity;
said second commodity information furnishing means extracting the related commodities, with the objective information, acquired by said objective achieving means, as a constraint condition, to transmit the extracted related commodities to said client device.

41. A storage medium holding a commodity information furnishing program which has a computer realize a first commodity information furnishing function of extracting the commodity information pertinent to a specified commodity requested over a network from the commodity information storage means, holding the commodity information pertinent to a variety of commodities, and furnishing the so extracted commodity information to the requesting client device; and
a second commodity information furnishing function of transmitting the commodity information of one or more related commodities, that is commodities usable in concerted fashion with a commodity, the commodity information of which has been stored in said commodity information storage means, for transmitting the so extracted commodity information to said client device.

42. The storage apparatus according to claim 41 wherein the related commodities that can be used in concerted fashion with said specified commodity are those commodities that allow for at least one of direct connection, radio connection, removable connection, internal connection or indirect mounting thereof with respect to said specified commodity.

43. The storage apparatus according to claim 41 wherein the operation verification information testifying to regular operation of each commodity carrying other commodity or commodities connected or mounted thereto is stored in said commodity information storage means; and
wherein in said second commodity information furnishing function, realized on said computer, normally operating commodities are transmitted from said operation verification information as related commodities to said client device.

44. The storage apparatus according to claim 43 wherein the commodity information furnishing program stored thereon has said computer realize the function of acquiring the information pertinent to the commodities usable in concerted fashion with a commodity, the commodity information of which has been stored in said commodity information storage means, for storage of the so acquired information in said commodity information storage means; and
the function of acquiring the operation verification information pertinent to the commodity, the commodity information of which has been stored in said commodity information storage means, from the commodity supplier, for storage of the so acquired information in said commodity information storage means.

45. The storage apparatus according to claim 41 wherein the commodity information furnishing program stored thereon has said computer realize the attention instigation information transmitting function of transmitting the attention instigation information in case a commodity selected as the related commodity proves an over-equipment with respect to said specified commodity.

46. The storage apparatus according to claim 41 wherein the commodity information furnishing program stored thereon has said computer realize the objective achieving function of acquiring the objective information specifying the objective of using or purchasing a commodity, and wherein, in said second commodity information furnishing function, realized on said computer, the related commodities are extracted from said commodity information storage means, with the objective information, acquired by said objective achieving function, as a constraint condition, to transmit the extracted related commodities to said client device.

47. A storage medium holding a commodity booking program which has a computer realize a first commodity information furnishing function of extracting the commodity information pertinent to a specified commodity requested over a network from the commodity information storage means, holding the commodity information pertinent to a variety of commodities, and furnishing the so extracted commodity information to the requesting client device;
a second commodity information furnishing function of extracting the commodity information of one or more related commodities, that is commodities usable in concerted fashion with one or more specified commodities, selected by said client device from the commodities furnished by said first commodity information furnishing function, for transmitting the so extracted commodity information to said client device;
an ordering information acquiring function of acquiring the ordered commodities and the ordering information transmitted from said client device from the commodities furnished by said first and second commodity information furnishing functions; and
the commodity booking function of booking orders for commodities in accordance with the ordering information acquired by said ordering information acquisition function.

48. The storage apparatus according to claim 47 wherein the related commodities that can be used in concerted fashion with said specified commodity are those commodities that allow for at least one of direct connection, radio connection, removable connection, internal connection or indirect mounting thereof with respect to said specified commodity.

49. The storage apparatus according to claim 47 wherein the operation verification information testifying to regular operation of each commodity carrying other commodity or commodities connected or mounted thereto is stored in said commodity information storage means; and
wherein in said second commodity information furnishing function, realized on said computer, normally operating commodities are transmitted from said operation verification information as related commodities to said client device.

50. The storage apparatus according to claim 49 wherein the commodity information furnishing program stored thereon has said computer realize the function of acquiring the information pertinent to the commodities usable in concerted fashion with a commodity, the commodity information of which has been stored in said commodity information storage means, for storage of the so acquired information in said commodity information storage means; and
the function of acquiring the operation verification information pertinent to the commodity, the commodity information of which has been stored in said commodity information storage means, from the commodity supplier, for storage of the so acquired information in said commodity information storage means.

51. The storage apparatus according to claim 47 wherein the commodity information furnishing program stored thereon has said computer realize the attention instigation information transmitting function of transmitting the attention instigation information in case a commodity selected as the related commodity proves an over-equipment with respect to said specified commodity.

52. The storage apparatus according to claim 47 wherein the commodity information furnishing program stored thereon has said computer realize the objective achieving function of acquiring the objective information specifying the objective of using or purchasing a commodity, and wherein, in said second commodity information furnishing function, realized on said computer, the related commodities are extracted from said commodity information storage means, with the objective information, acquired by said objective achieving means, as a constraint condition, to transmit the extracted related commodities to said client device.

53. The commodity selling apparatus according to claim 29 further comprising:
means for receiving a correction request from a commodity supplier for furnishing the commodity information or the operation verification information pertinent to the commodity from said commodity supplier;
means for acquiring the correction information pertinent to the commodity information or the operation verification information as corrected by said commodity supplier based on the commodity information or the operation verification information furnished; and
means for correcting the commodity information or the operation verification information stored in said commodity information storage means based on the coercion information acquired.

54. A commodity information furnishing method comprising:
a first commodity information furnishing step of furnishing the commodity information pertinent to a specified commodity requested over a network to the requesting client device; and
a second commodity information furnishing step of transmitting the commodity information of one or more related commodities, that is commodities usable in concerted fashion with one or more specified commodities, selected in the client device from the commodities furnished in said first commodity information furnishing step, for transmitting the commodity information to said client device.

55. A commodity information furnishing apparatus comprising:
commodity information storage means for holding the commodity information pertinent to a variety of commodities;
first commodity information furnishing means for extracting the commodity information pertinent to a specified commodity as requested over a network from said commodity information storage means and for furnishing the extracted commodity information to a requesting client device; and
second commodity information furnishing means for extracting from said commodity information storage means the commodity information of commodities usable in concerted fashion with one or more specified commodity selected by said client device from the commodities furnished by said first commodity information furnishing means, and for transmitting the extracted commodity information to said client device.
